(19)

**Europäisches Patentamt**
**European Patent Office**
**Office européen des brevets**

(11) **EP 4 697 270 A1**

(12) **EUROPEAN PATENT APPLICATION**
published in accordance with Art. 153(4) EPC

(43) Date of publication:
**18.02.2026 Bulletin 2026/08**

(21) Application number: **24788769.8**

(22) Date of filing: **10.04.2024**

(51) International Patent Classification (IPC):
***G06T 9/00*** *(2006.01)*

(52) Cooperative Patent Classification (CPC):
**G06T 9/00**

(86) International application number:
**PCT/JP2024/014562**

(87) International publication number:
**WO 2024/214745 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.04.2023 US 202363459016 P**
**09.05.2023 US 202363465081 P**

(71) Applicant: **Panasonic Intellectual Property
Corporation
of America
Torrance, CA 90504 (US)**

(72) Inventors:
• **NISHI, Takahiro**
**kadoma-shi, Osaka 571-0057 (JP)**
• **SUGIO, Toshiyasu**
**kadoma-shi, Osaka 571-0057 (JP)**

• **IGUCHI, Noritaka**
**kadoma-shi, Osaka 571-0057 (JP)**
• **LIM, Chong Soon**
**Singapore 469332 (SG)**
• **WU, Zheng**
**Singapore 469332 (SG)**
• **TEO, Han Boon**
**Singapore 469332 (SG)**
• **LOI, Keng Liang**
**Singapore 469332 (SG)**
• **HAN, Chung Dean**
**Singapore 469332 (SG)**
• **DUMANOV, Farman**
**Singapore 469332 (SG)**
• **YADAV, Praveen Kumar**
**Singapore 469332 (SG)**

(74) Representative: **Grünecker Patent- und
Rechtsanwälte
PartG mbB
Leopoldstraße 4
80802 München (DE)**

(54) **ENCODING DEVICE, DECODING DEVICE, ENCODING METHOD, AND DECODING METHOD**

(57)     An encoding device (100) includes memory (152) and a circuit (151) accessible to the memory (152). In operation, the circuit (151) encodes, for each of vertices included in a three-dimensional mesh, displacement data to be used to derive a displacement vector. The displacement vector indicates a displacement from a first position of a vertex generated using a base mesh. The vertices include a first vertex, a second vertex, and a third vertex, and the displacement data of the first vertex indicates a difference between the displacement vector of the first vertex and a combined vector of the displacement vector of the second vertex and the displacement vector of the third vertex.

FIG. 52

EP 4 697 270 A1

**Description**

[Technical Field]

The present disclosure relates to, for example, an encoding device.

[Background Art]

PTL 1 proposes a method and a device for encoding and decoding three-dimensional mesh data.

[Citation List]

[Patent Literature]

[PTL 1] Japanese Unexamined Patent Application Publication No. 2006-187015

[Summary of Invention]

[Technical Problem]

There are demands for further improvement in processing of encoding or decoding three-dimensional data. An object of the present disclosure is to improve processing of encoding or decoding three-dimensional data.

[Solution to Problem]

An encoding device according to one aspect of the present disclosure is an encoding device including memory and a circuit accessible to the memory. In operation, the circuit encodes, for each of vertices included in a three-dimensional mesh, displacement data to be used to derive a displacement vector, the displacement vector indicating a displacement from a first position of a vertex generated using a base mesh, and the vertices include a first vertex, a second vertex, and a third vertex, and the displacement data of the first vertex indicates a difference between the displacement vector of the first vertex and a combined vector of the displacement vector of the second vertex and the displacement vector of the third vertex.

Noted that these general or specific aspects may be implemented using a system, a device, a method, an integrated circuit, a computer program, or a non-transitory computer-readable recording medium such as a CD-ROM, or any combination of systems, devices, methods, integrated circuits, computer programs, and recording media.

[Advantageous Effects of Invention]

The present disclosure can contribute toward improving processing of encoding three-dimensional data and the like.

[Brief Description of Drawings]

[FIG. 1]

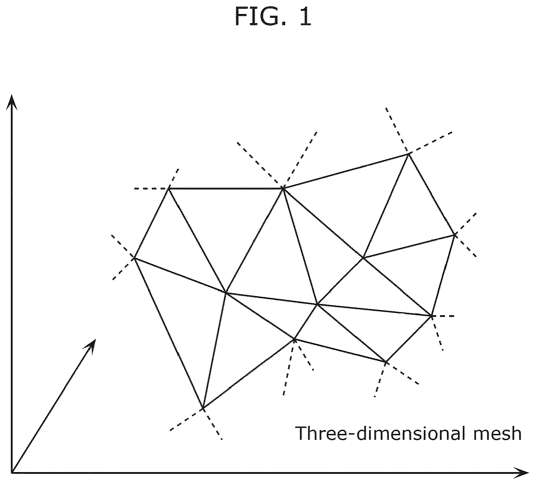

FIG. 1 is a conceptual diagram illustrating a three-dimensional mesh according to an embodiment.
[FIG. 2]

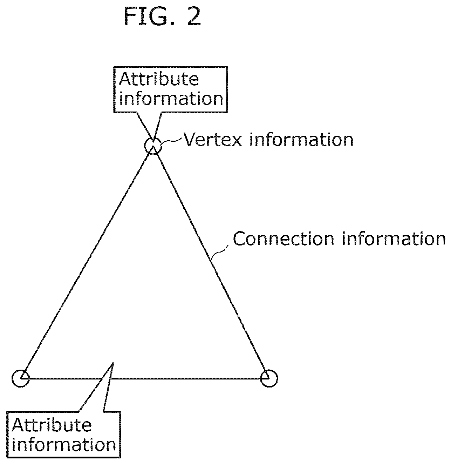

FIG. 2 is a conceptual diagram illustrating basic elements of the three-dimensional mesh according to the embodiment.
[FIG. 3]

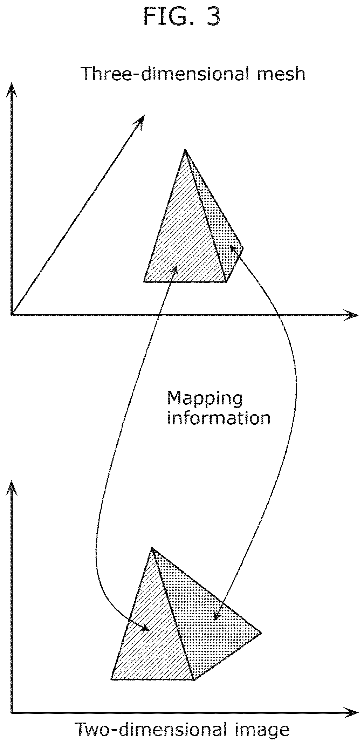

FIG. 3 is a conceptual diagram illustrating mapping according to the embodiment.
[FIG. 4]

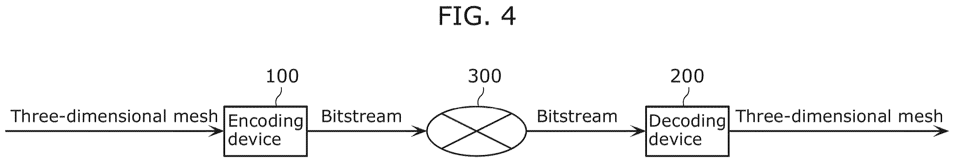

FIG. 4 is a block diagram illustrating a configuration example of an encoding/decoding system according to the embodiment.
[FIG. 5]

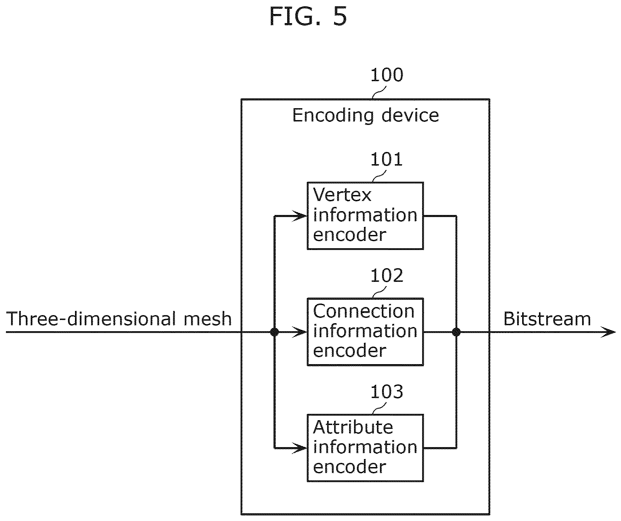

FIG. 5 is a block diagram illustrating a configuration example of an encoding device according to the embodiment.
[FIG. 6]

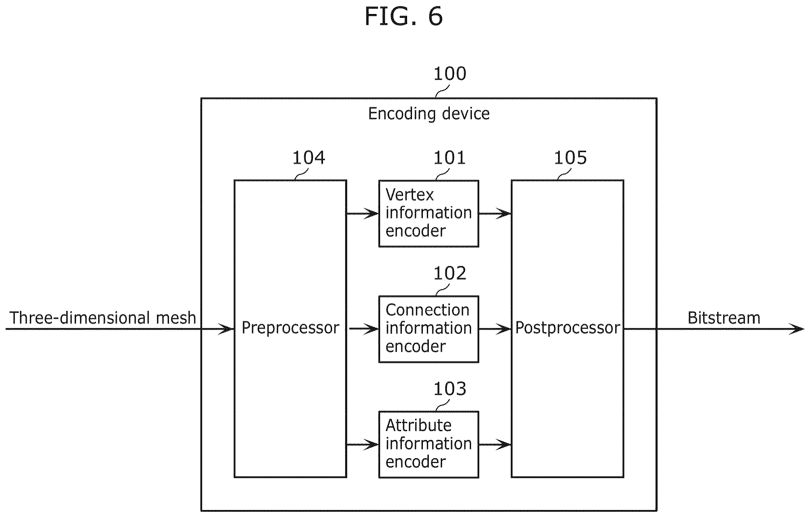

FIG. 6 is a block diagram illustrating another configuration example of the encoding device according to the embodiment.

[FIG. 7]

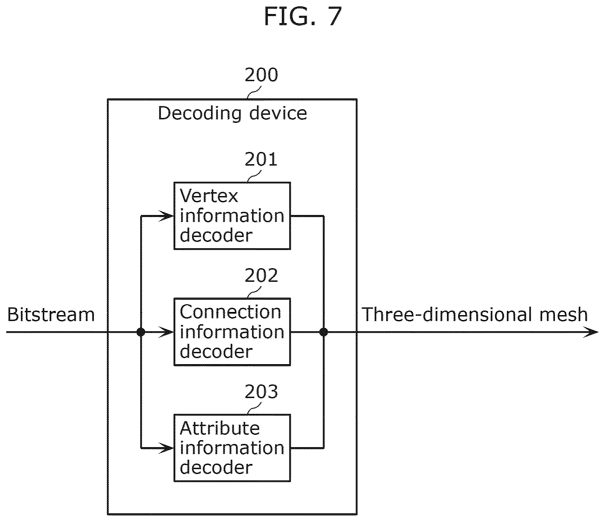

FIG. 7 is a block diagram illustrating a configuration example of a decoding device according to the embodiment.

[FIG. 8]

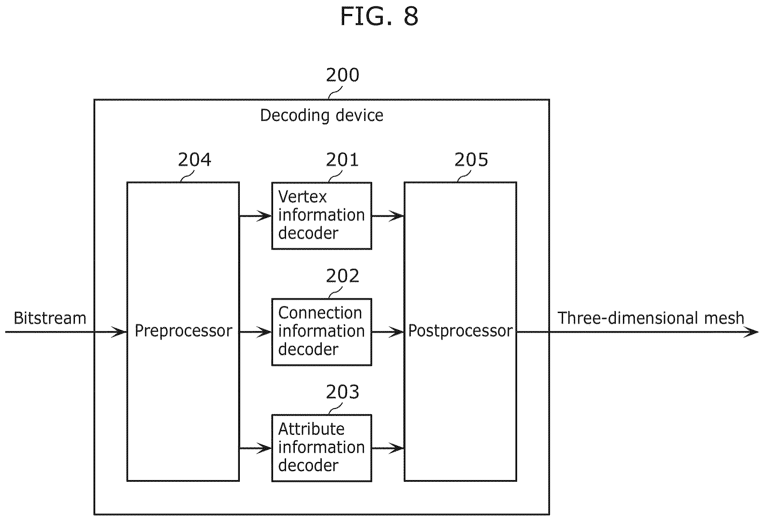

FIG. 8 is a block diagram illustrating another configuration example of the decoding device according to the embodiment.

[FIG. 9]

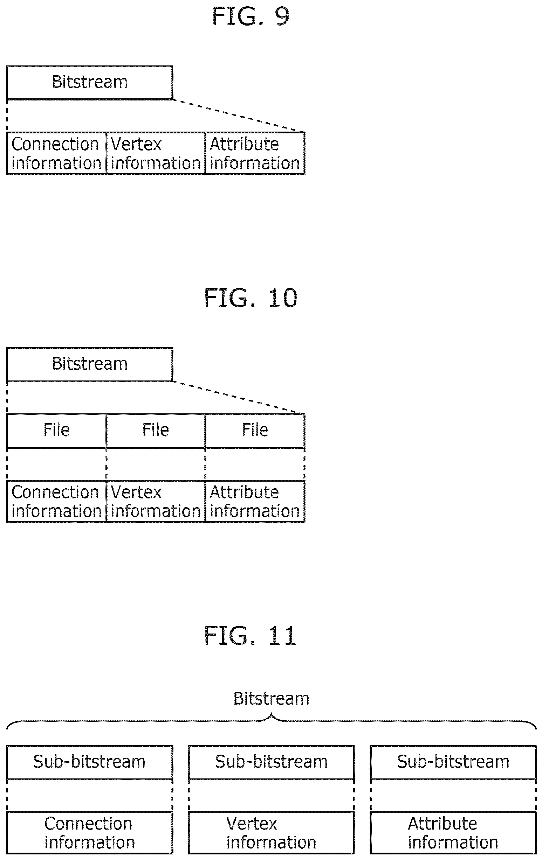

FIG. 9 is a conceptual diagram illustrating a configuration example of a bitstream according to the embodiment.

[FIG. 10]

FIG. 10 is a conceptual diagram illustrating another configuration example of the bitstream according to the embodiment.

[FIG. 11]

FIG. 11 is a conceptual diagram illustrating yet another configuration example of the bitstream according to the embodiment.

[FIG. 12]

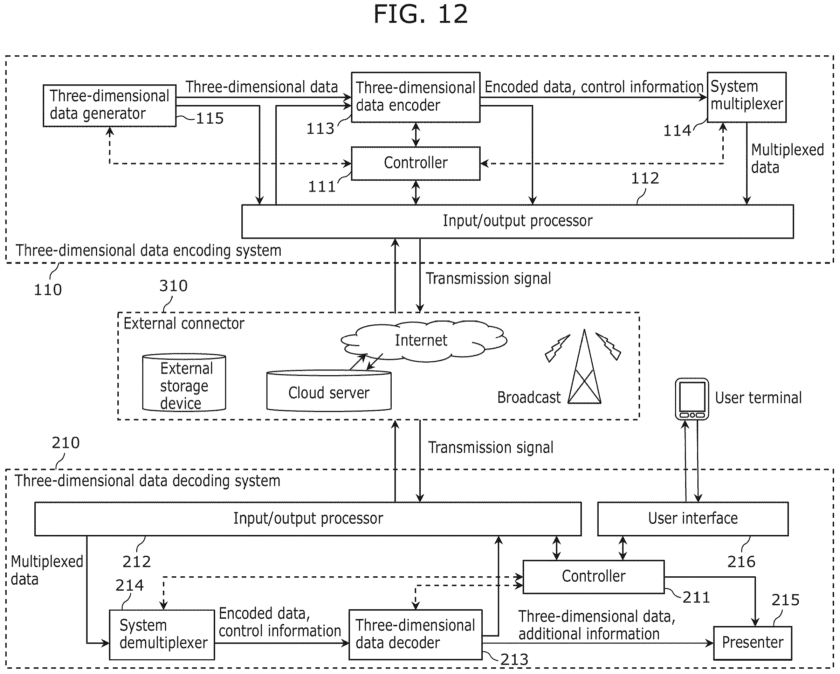

FIG. 12 is a block diagram illustrating a specific example of the encoding/decoding system according to the embodiment.

[FIG. 13]

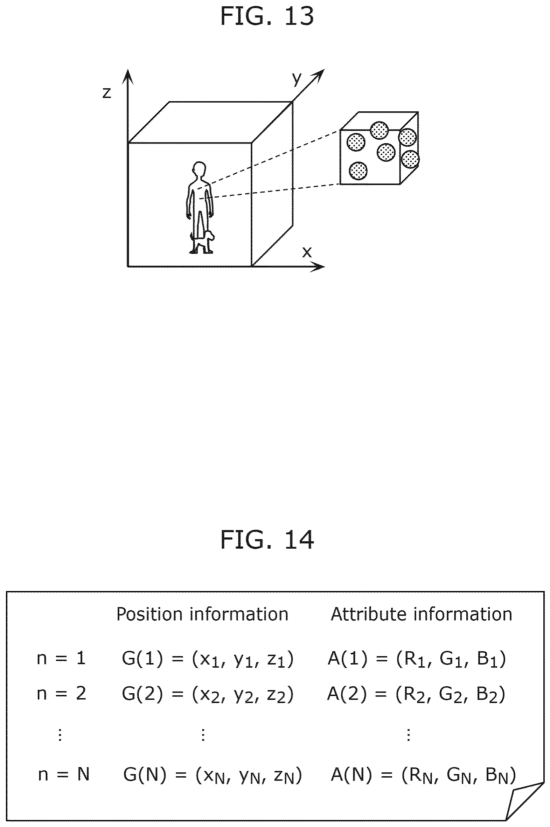

FIG. 13 is a conceptual diagram illustrating a configuration example of point cloud data according to the embodiment.

[FIG. 14]

FIG. 14 is a conceptual diagram illustrating a data file example of the point cloud data according to the embodiment.

[FIG. 15]

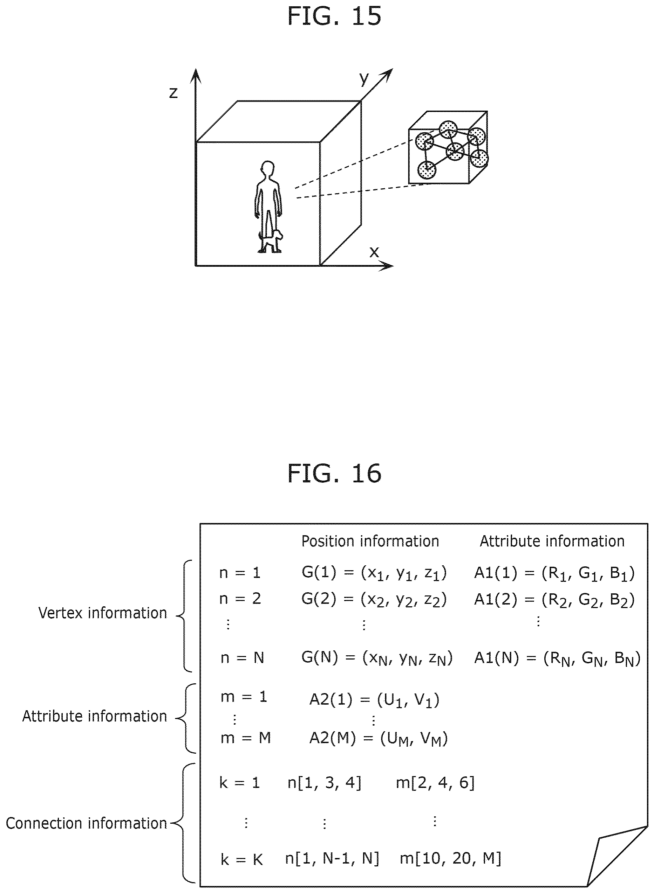

FIG. 15 is a conceptual diagram illustrating a configuration example of mesh data according to the embodiment.

[FIG. 16]

FIG. 16 is a conceptual diagram illustrating a data file example of the mesh data according to the embodiment.

[FIG. 17]

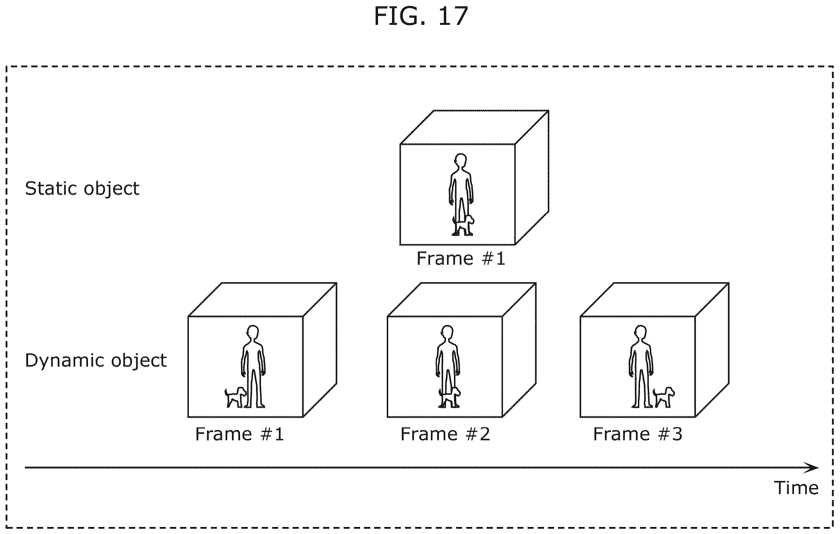

FIG. 17 is a conceptual diagram illustrating a type of three-dimensional data according to the embodiment.

[FIG. 18]

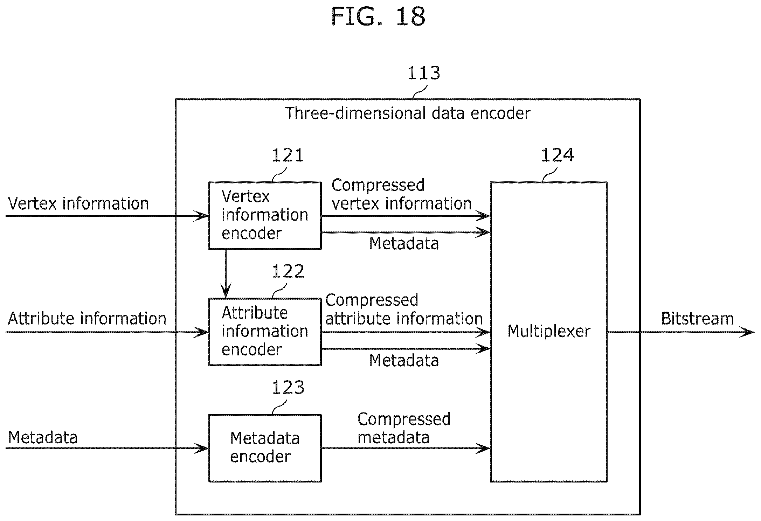

FIG. 18 is a block diagram illustrating a configuration example of a three-dimensional data encoder according to the embodiment.

[FIG. 19]

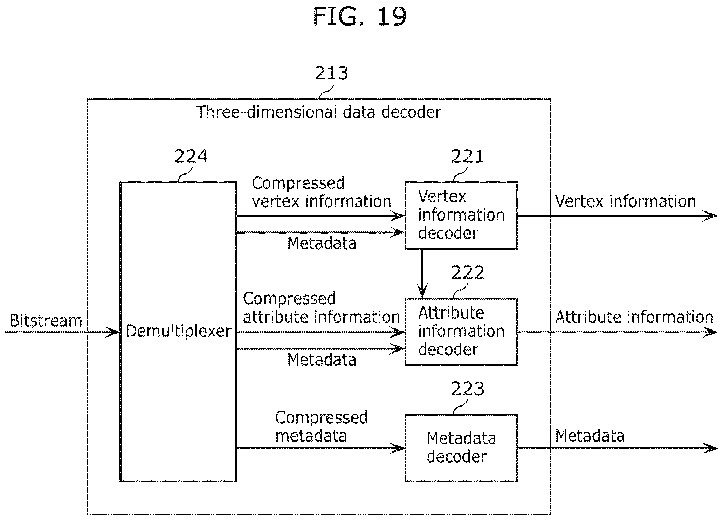

FIG. 19 is a block diagram illustrating a configuration example of a three-dimensional data decoder according to the embodiment.

[FIG. 20]

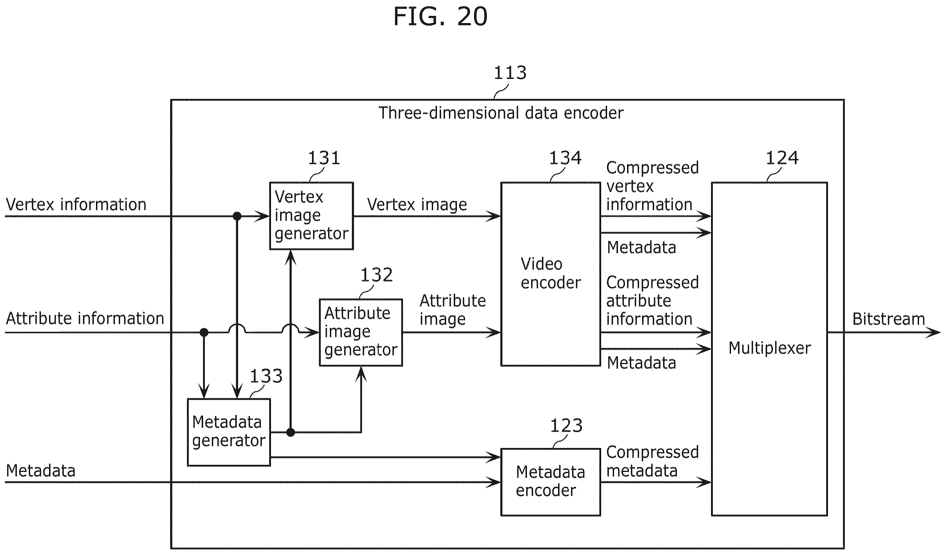

FIG. 20 is a block diagram illustrating another configuration example of the three-dimensional data encoder according to the embodiment.

[FIG. 21]

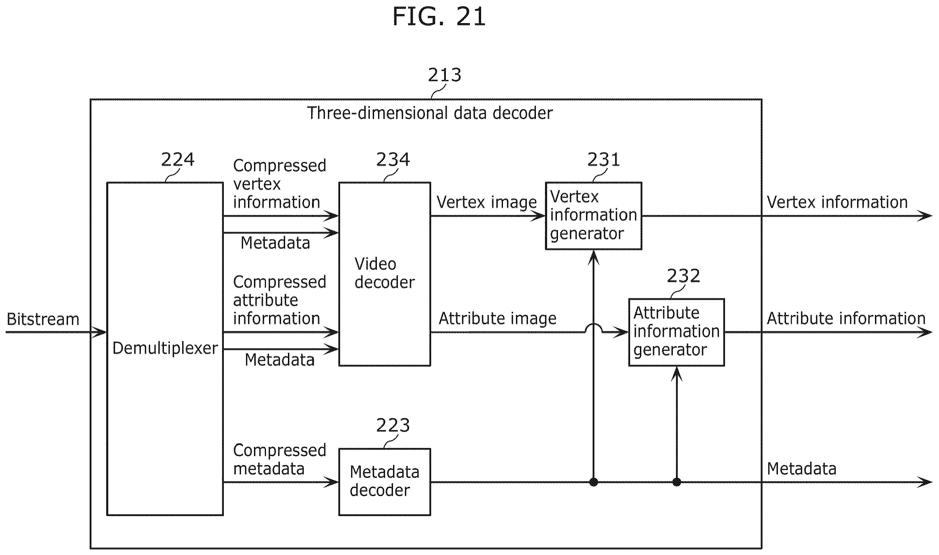

FIG. 21 is a block diagram illustrating another configuration example of the three-dimensional data decoder according to the embodiment.

[FIG. 22]

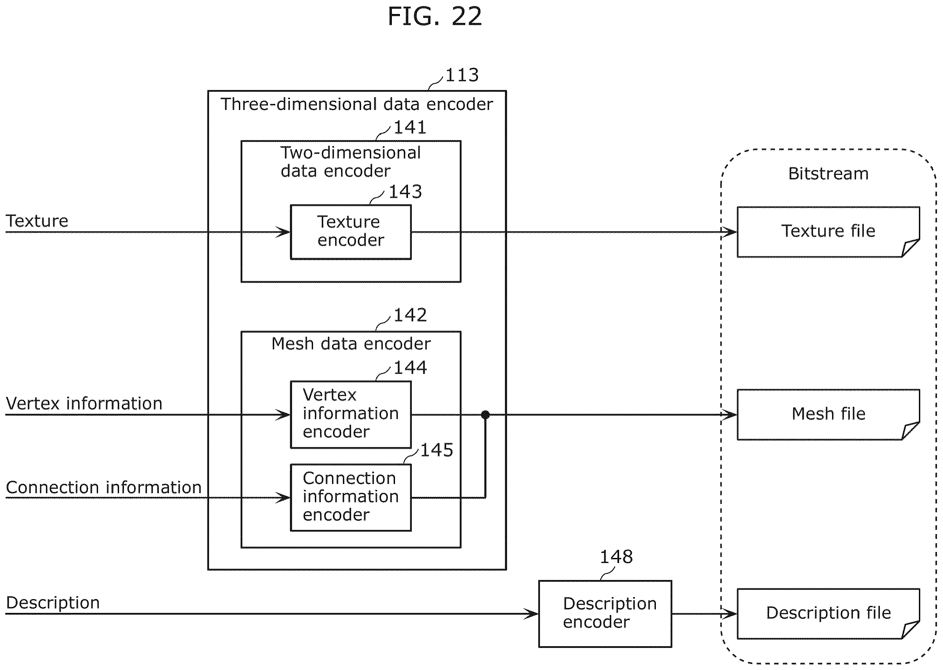

FIG. 22 is a conceptual diagram illustrating a specific example of encoding processing according to the embodiment.

[FIG. 23]

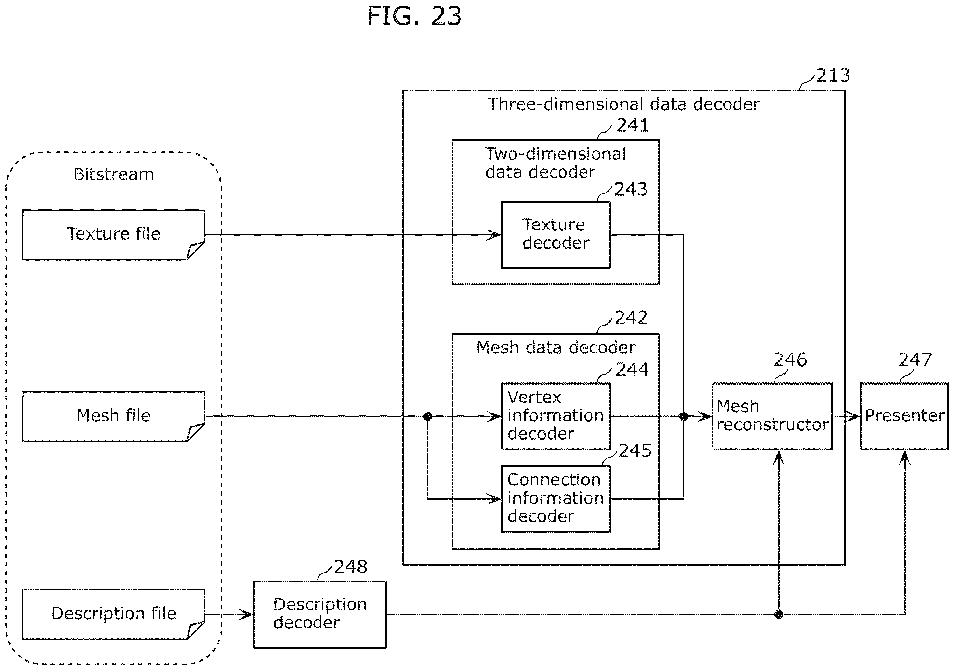

FIG. 23 is a conceptual diagram illustrating a specific example of decoding processing according to the embodiment.

[FIG. 24]

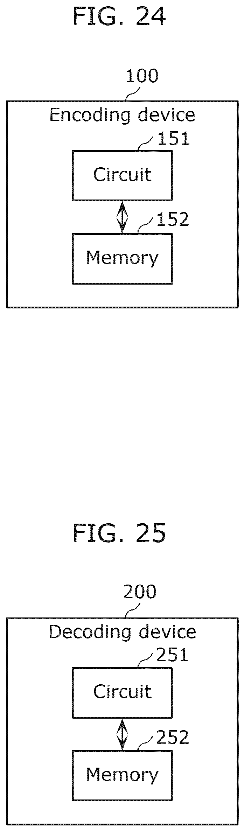

FIG. 24 is a block diagram illustrating an implementation example of the encoding device according to the embodiment.

[FIG. 25]

FIG. 25 is a block diagram illustrating an implementation example of the decoding device according to the embodiment.

[FIG. 26]

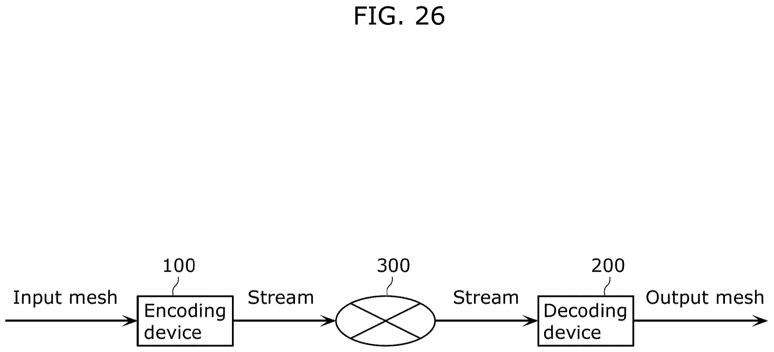

FIG. 26 is a block diagram illustrating another configuration example of the encoding/decoding system according to the embodiment.

[FIG. 27]

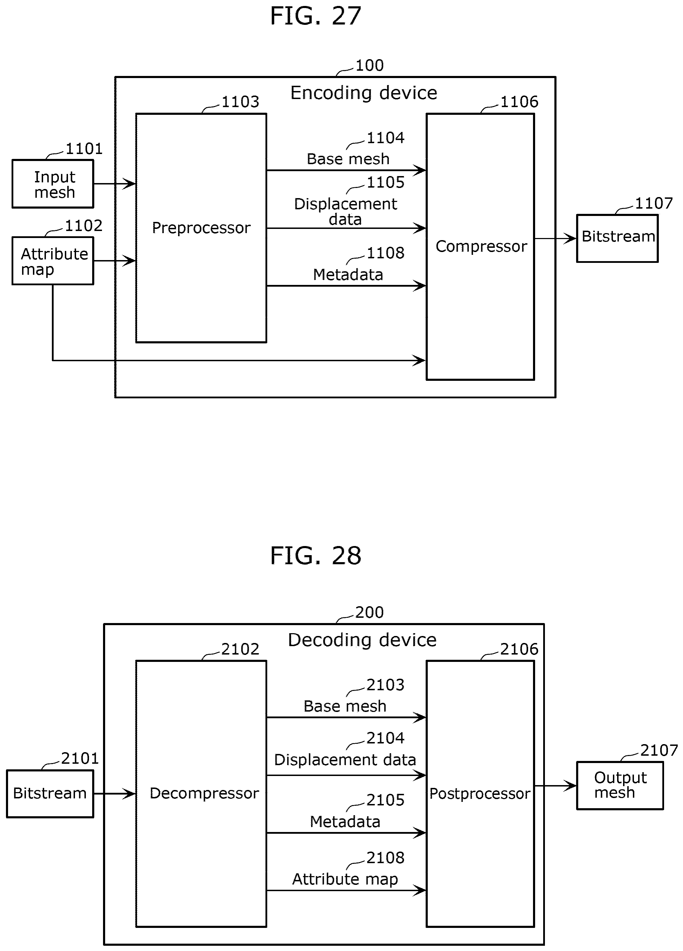

FIG. 27 is a block diagram illustrating another configuration example of the encoding device according to the embodiment.

[FIG. 28]

FIG. 28 is a block diagram illustrating another configuration example of the decoding device according to the embodiment.

[FIG. 29]

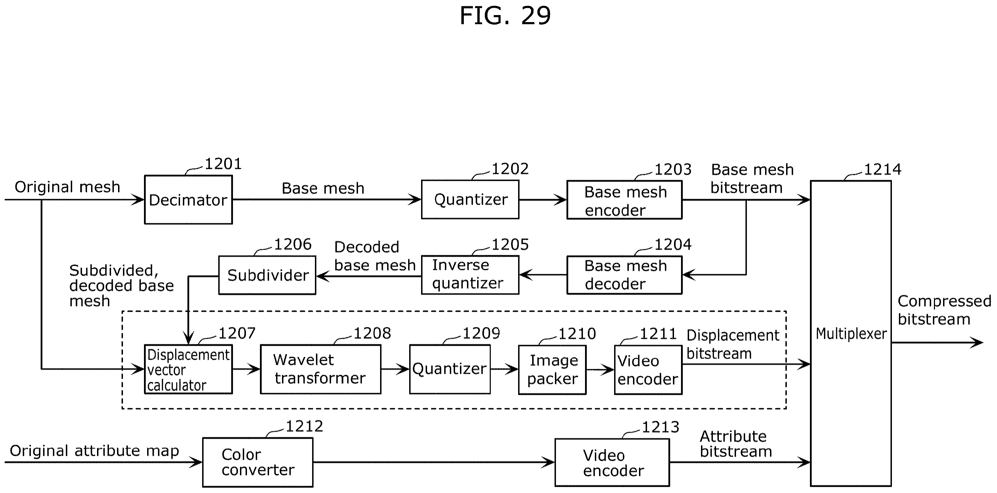

FIG. 29 is a block diagram illustrating a detailed configuration example of the encoding device according to the embodiment.

[FIG. 30]

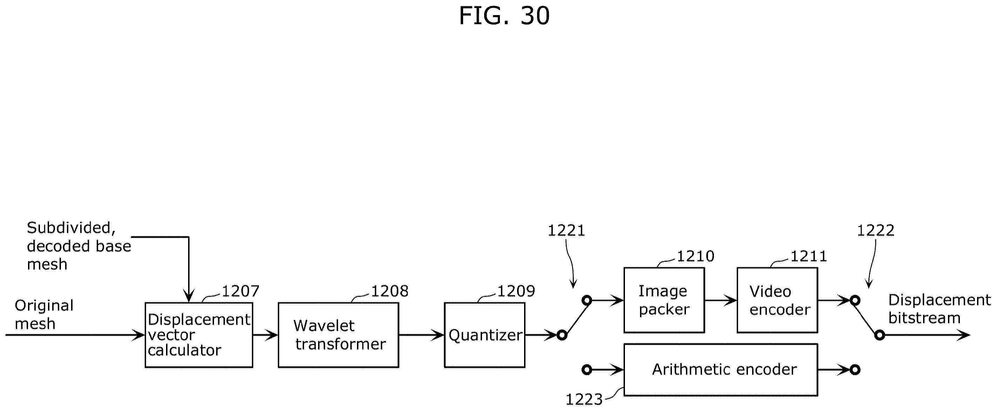

FIG. 30 is a block diagram illustrating a detailed configuration variation of the encoding device according to the embodiment.

[FIG. 31]

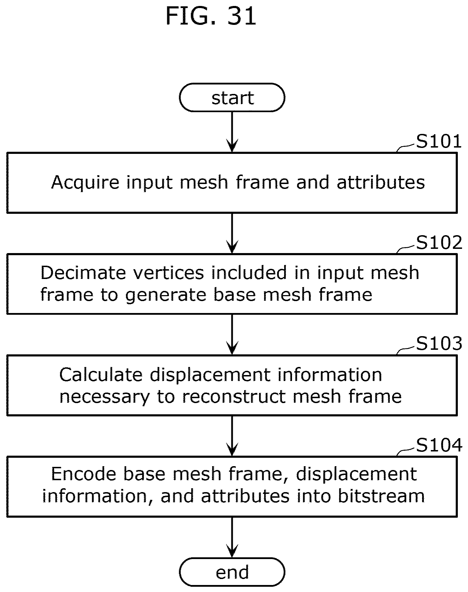

FIG. 31 is a flowchart illustrating a process by the encoding device according to the embodiment.

[FIG. 32]

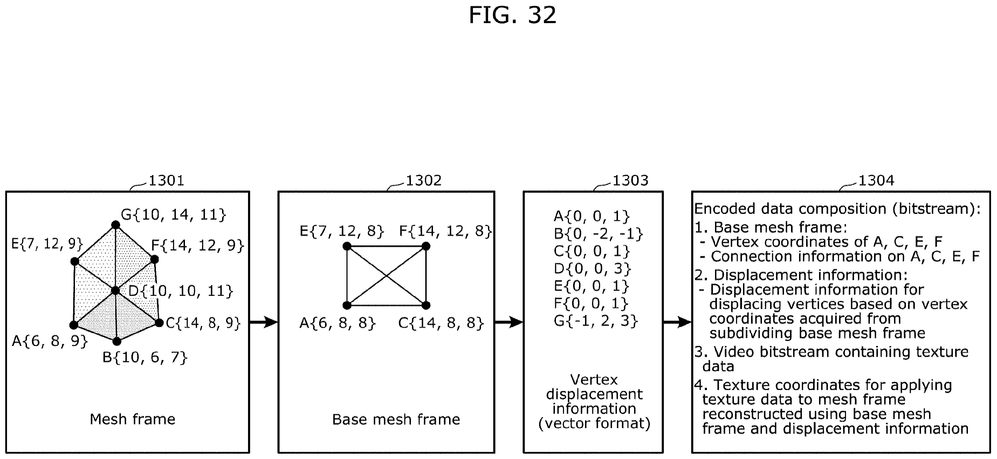

FIG. 32 is an explanatory diagram schematically illustrating the encoding of a mesh frame according to the embodiment.

[FIG. 33]

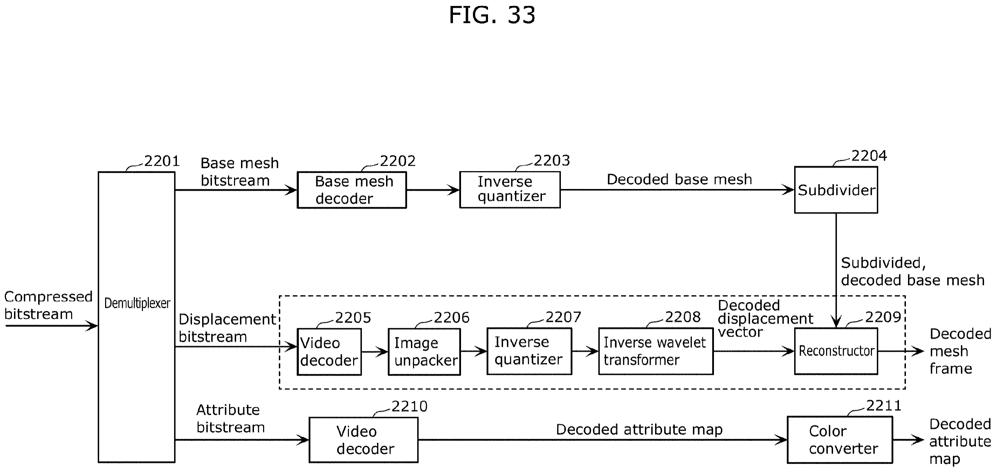

FIG. 33 is a block diagram illustrating a detailed configuration example of the decoding device according to the embodiment.

[FIG. 34]

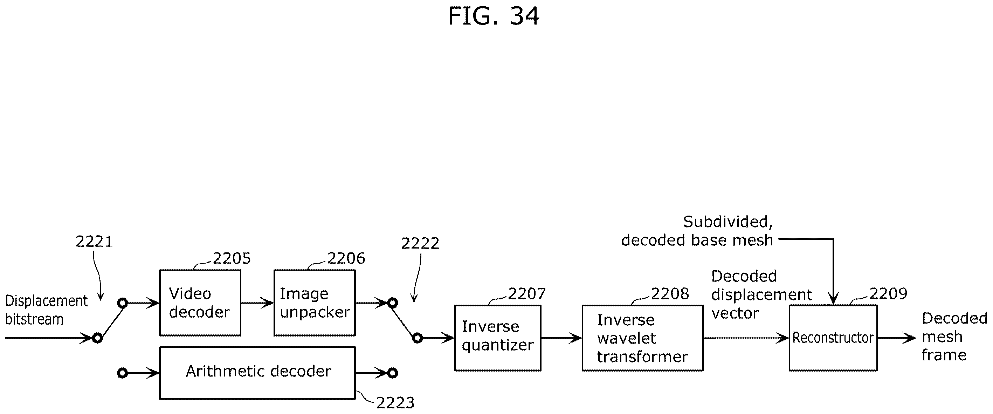

FIG. 34 is a block diagram illustrating a detailed configuration variation of the decoding device according to the embodiment.

[FIG. 35]

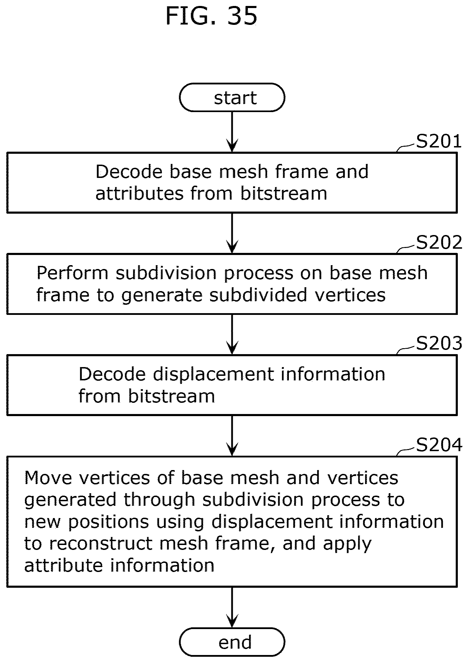

FIG. 35 is a flowchart illustrating a process by the decoding device according to the embodiment.

[FIG. 36]

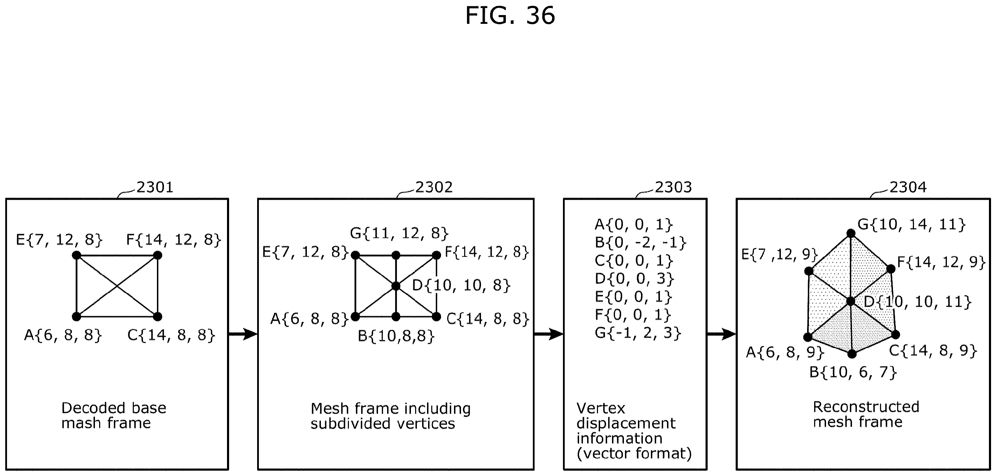

FIG. 36 is an explanatory diagram schematically illustrating the decoding of a mesh frame according to the embodiment.

[FIG. 37]

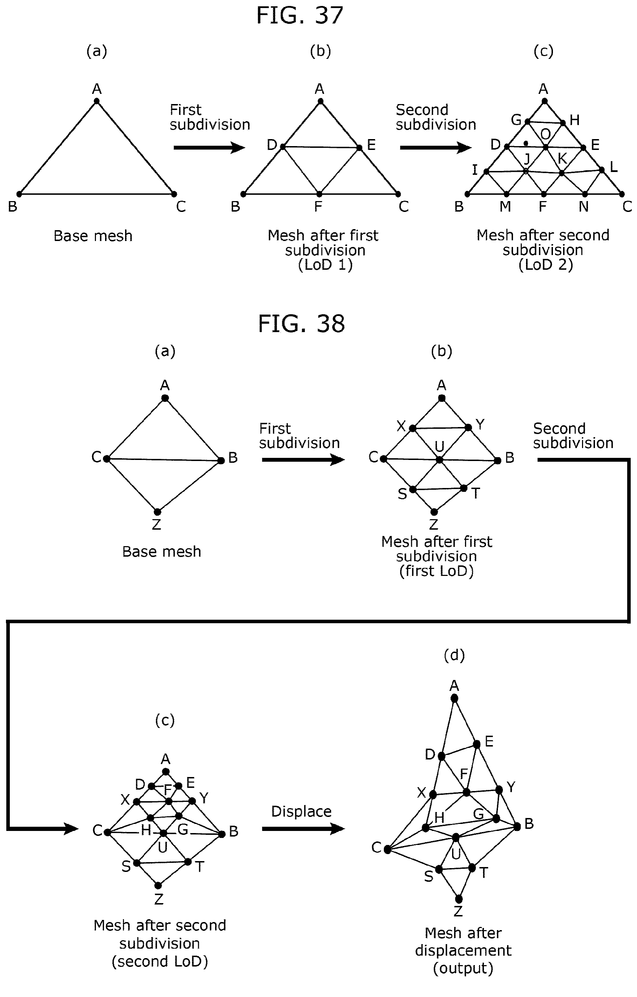

FIG. 37 is an explanatory diagram illustrating an example of a subdivision according to the embodiment.

[FIG. 38]

FIG. 38 is an explanatory diagram illustrating an example of the displacement of vertices in which the vertices are subdivided and then displaced, according to the embodiment.

[FIG. 39]

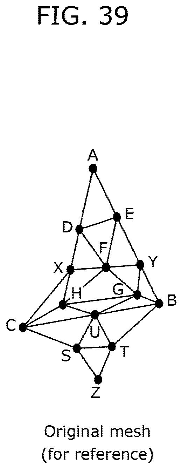

FIG. 39 is an explanatory diagram illustrating an example of the vertices of an original mesh according to the embodiment.

[FIG. 40]

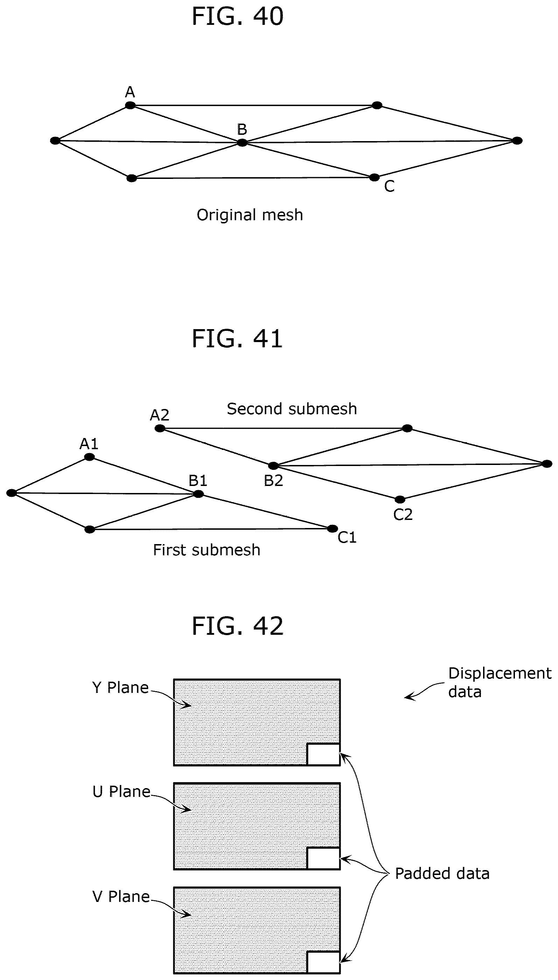

FIG. 40 is an explanatory diagram illustrating an example of a mesh according to the embodiment.

[FIG. 41]

FIG. 41 is an explanatory diagram illustrating an example of the division of a mesh into submeshes according to the embodiment.

[FIG. 42]

FIG. 42 is a first explanatory diagram illustrating an example of the packing of displacement information into an image frame according to the embodiment.

[FIG. 43]

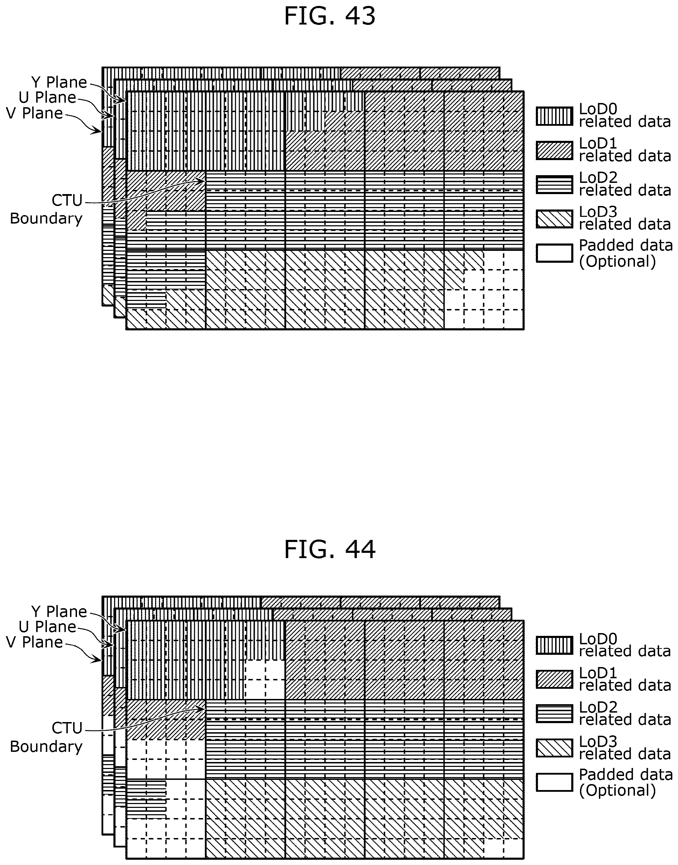

FIG. 43 is a second explanatory diagram illustrating an example of the packing of displacement information into an image frame according to the embodiment.

[FIG. 44]

FIG. 44 is a third explanatory diagram illustrating an example of the packing of displacement information into an image frame according to the embodiment.

[FIG. 45]

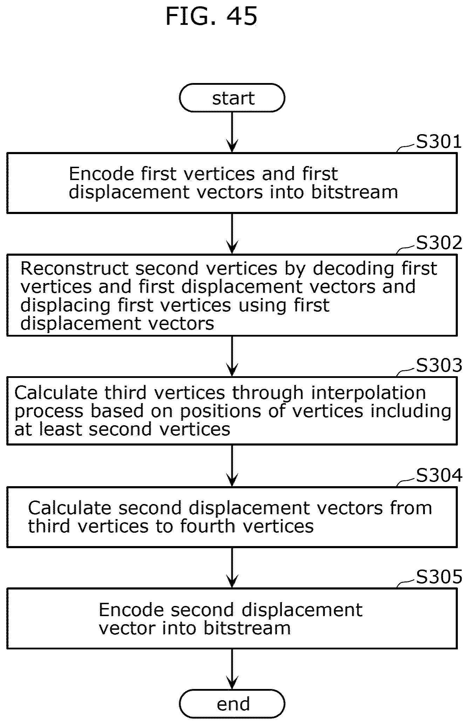

FIG. 45 is a flowchart illustrating an example of a detailed process by the encoding device according to the embodiment.

[FIG. 46]

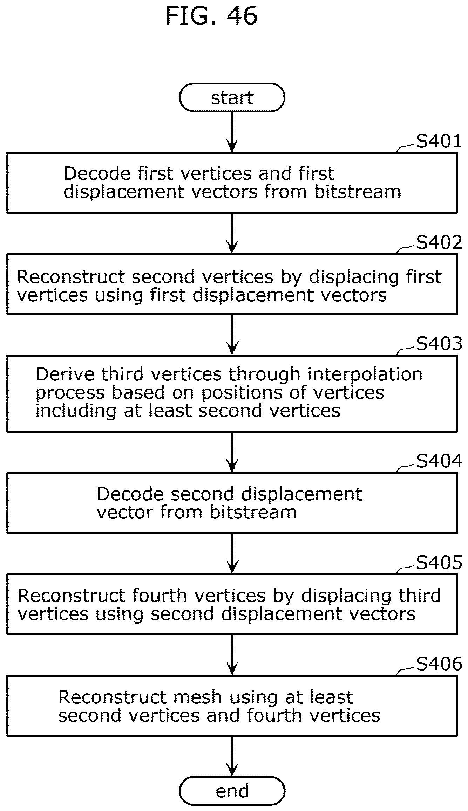

FIG. 46 is a flowchart illustrating an example of a detailed process by the decoding device according to the embodiment.

[FIG. 47]

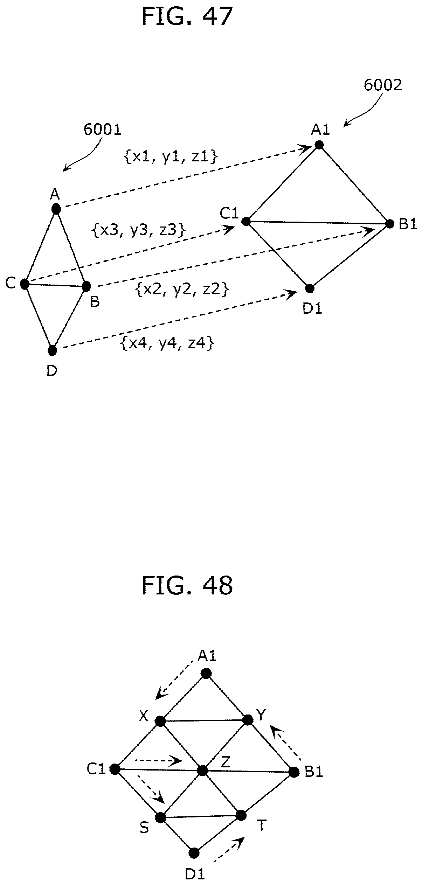

FIG. 47 is an explanatory diagram illustrating a process of reconstructing second vertices according to the embodiment.

[FIG. 48]

FIG. 48 is an explanatory diagram illustrating a first example of a process of calculating third vertices according to the embodiment.

[FIG. 49]

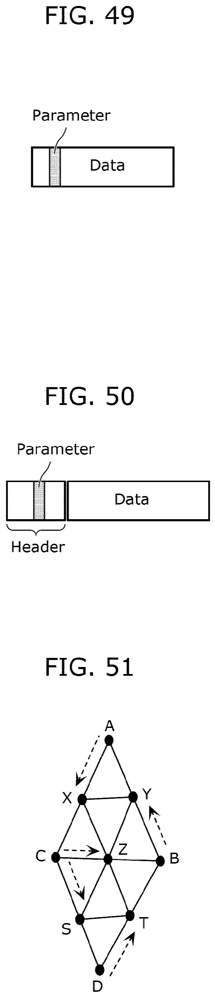

FIG. 49 is an explanatory diagram illustrating a first example of the storage location of a parameter according to the embodiment.
[FIG. 50]
FIG. 50 is an explanatory diagram illustrating a second example of the storage location of a parameter according to the embodiment.
[FIG. 51]
FIG. 51 is an explanatory diagram illustrating a second example of a process of calculating third vertices according to the embodiment.
[FIG. 52]

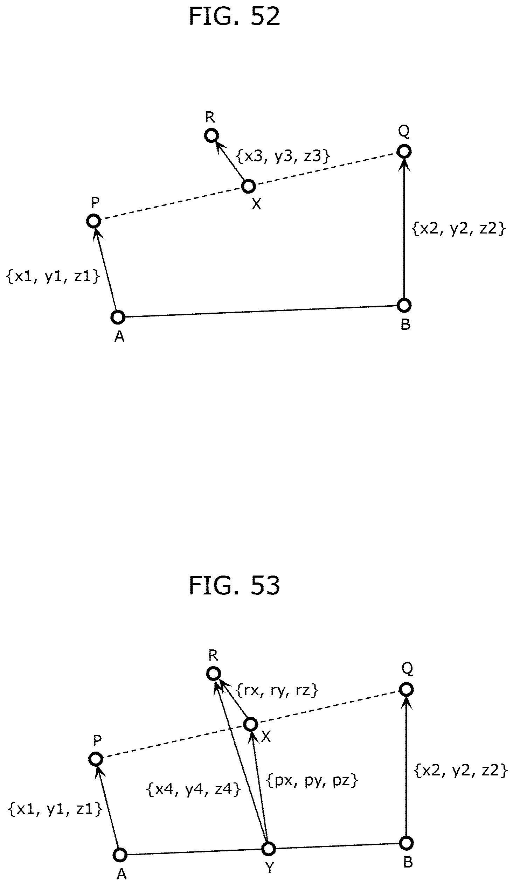

FIG. 52 is an explanatory diagram illustrating a first example of an interpolation process according to the embodiment.
[FIG. 53]
FIG. 53 is an explanatory diagram illustrating a second example of the interpolation process according to the embodiment.
[FIG. 54]

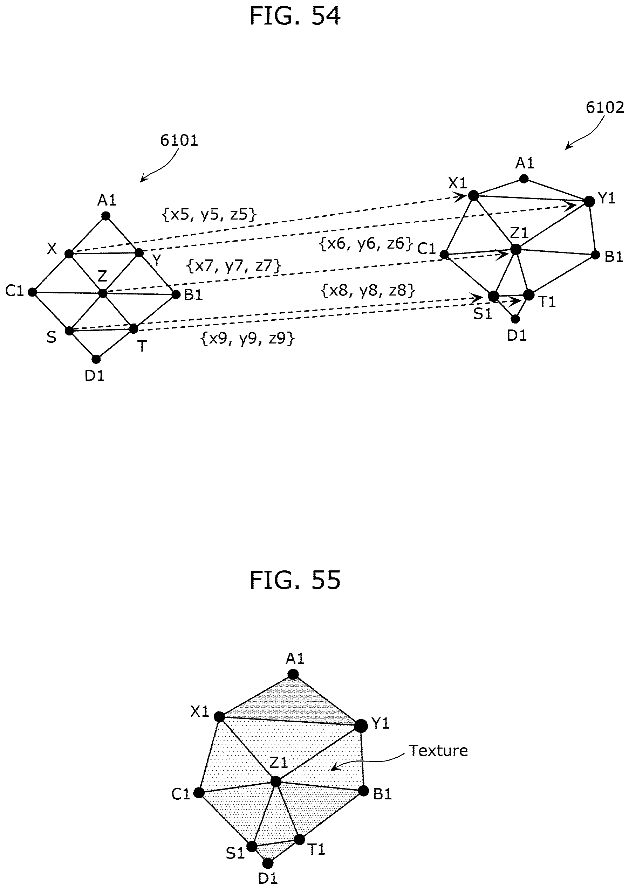

FIG. 54 is an explanatory diagram illustrating a process of reconstructing fourth vertices according to the embodiment.
[FIG. 55]
FIG. 55 is an explanatory diagram illustrating an example of a reconstructed mesh frame according to the embodiment.
[FIG. 56]

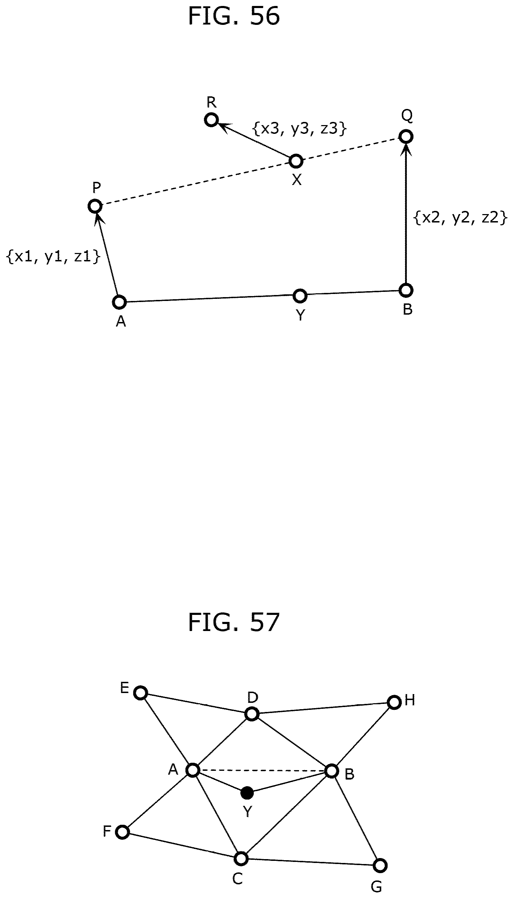

FIG. 56 is an explanatory diagram illustrating a third example of the interpolation process according to the embodiment.
[FIG. 57]
FIG. 57 is an explanatory diagram illustrating a fourth example of the interpolation process according to the embodiment.

[Description of Embodiments]

<Introduction>

Three-dimensional (3D) meshes are used in, for example, a computer graphics video. For example, the computer graphics video may include a plurality of frames different in time from one another, and each of the frames may be represented in the form of three-dimensional meshes.

The three-dimensional meshes each include vertex information indicating the positions of a plurality of vertices in a three-dimensional space, connection information indicating the connections between the plurality of vertices, and attribute information indicating attributes of the vertices or faces. The faces are each built in accordance with the connectivity relation among the plurality of vertices. Such three-dimensional meshes can represent various computer graphics videos.

For the transmission and storage of three-dimensional meshes, an efficient encoding and decoding of three-dimensional meshes is expected. For the efficient encoding and decoding of three-dimensional meshes, arithmetic encoding and arithmetic decoding may be used.

There is a demand for further improvement in an encoding or decoding process related to three-dimensional data. An object of the present disclosure is to improve the encoding or decoding process related to three-dimensional data.

Hereinafter, aspects of the invention derived from the content of the disclosure of the present description will be described by way of example, and the effects and the like derived from the aspect of the invention will be described.

(1) An encoding device including: memory; and a circuit accessible to the memory, in which, in operation, the circuit encodes, for each of vertices included in a three-dimensional mesh, displacement data to be used to derive a displacement vector, the displacement vector indicating a displacement from a first position of a vertex generated using a base mesh, and the vertices include a first vertex, a second vertex, and a third vertex, and the displacement data of the first vertex indicates a difference between the displacement vector of the first vertex and a combined vector of the displacement vector of the second vertex and the displacement vector of the third vertex.

According to this aspect, the encoding device can reduce the amount of information in the displacement data on the first vertex in some cases since the displacement data on the first vertex indicates the difference between the displacement vector of the first vertex and the resultant vector of the displacement vector of the second vertex and the displacement vector of the third vertex. As a result, the encoding device can contribute to a reduction in the amount of encoded information, thus enhancing the efficiency of the encoding or decoding process in some cases. As seen from the above, the encoding device is capable of improving an encoding or decoding process related to three-dimensional data.

(2) The encoding device according to (1), in which the circuit generates the combined vector by equally weighting and combining the displacement vector of the second vertex and the displacement vector of the third vertex, and encodes the displacement data of the first vertex using the combined vector generated.

According to this aspect, the encoding device adds the displacement vector of the second vertex and the displacement vector of the third vertex with the equal weights. The encoding device can thus generate the resultant vector through an easier computing process, contributing to a reduction in a processing load or a power consumption. As a result, the encoding device can improve an encoding or decoding process related to three-dimensional data.

(3) The encoding device according to (1), in which the circuit generates the combined vector by differently weighting and combining the displacement vector of the second vertex and the displacement vector of the third vertex, and encodes the displacement data of the first vertex using the combined vector generated.

According to this aspect, the encoding device can generate the resultant vector more appropriately in some cases by adding the displacement vector of the second vertex and the displacement vector of the third vertex with the different weights. For example, the weights for the displacement vector of the second vertex and the displacement vector of the third vertex can be appropriately set according to parameters of the encoding process. In this case, the resultant vector may be appropriately generated according to the parameters of the encoding process. This can contribute to an improvement in the encoding or decoding process. As a result, the encoding device can improve an encoding or decoding process related to three-dimensional data.

(4) The encoding device according to (1), in which the combined vector is generated by weighting and combining displacement vectors including the displacement vector of the second vertex and the displacement vector of the third vertex, and a sum of weighting factors is 1.

According to this aspect, the encoding device can reduce the amount of information in displacement data on a first vertex more easily in some cases by using a reference point that is set on the segment connecting the second vertex and the third vertex. As a result, the encoding device can improve an encoding or decoding process related to three-dimensional data.

(5) The encoding device according to (1), in which the combined vector is generated by weighting and combining displacement vectors including the displacement vector of the second vertex and the displacement vector of the third vertex, and a sum of weighting factors is not 1.

According to this aspect, the encoding device can reduce the amount of information in displacement data on a first vertex in some cases by using a reference point that is set at a position not on the segment connecting the second vertex and the third vertex. As a result, the encoding device can improve an encoding or decoding process related to three-dimensional data.

(6) A decoding device including: memory; and a circuit accessible to the memory, in which, in operation, the circuit decodes, for each of vertices included in a three-dimensional mesh, displacement data to be used to derive a displacement vector, the displacement vector indicating a displacement from a first position of a vertex generated using a base mesh, the vertices including a first vertex, a second vertex, and a third vertex, and the circuit generates the displacement vector of the first vertex using the displacement data of the first vertex and a combined vector of the displacement vector of the second vertex and the displacement vector of the third vertex.

According to this aspect, the decoding device can reduce the amount of information in the displacement data on the first vertex in some cases since the displacement data on the first vertex indicates the difference between the displacement vector of the first vertex and the resultant vector of the displacement vector of the second vertex and the displacement vector of the third vertex. As a result, the decoding device can contribute to a reduction in the amount of encoded information, thus enhancing the efficiency of the encoding or decoding process in some cases. As seen from the above, the encoding device is capable of improving an encoding or decoding process related to three-dimensional data.

(7) The decoding device according to (6), in which the circuit generates the combined vector by equally weighting and combining the displacement vector of the second vertex and the displacement vector of the third vertex, and encodes the displacement data of the first vertex using the combined vector generated.

According to this aspect, the decoding device adds the displacement vector of the second vertex and the displacement vector of the third vertex with the equal weights. The decoding device can thus generate the resultant vector through an easier computing process, contributing to a reduction in a processing load or a power consumption. As a result, the decoding device can improve an encoding or decoding process related to three-dimensional data.

(8) The decoding device according to (6), in which the circuit generates the combined vector by differently weighting and combining the displacement vector of the second vertex and the displacement vector of the third vertex, and encodes the displacement data of the first vertex using the combined vector generated.

According to this aspect, the decoding device can generate the resultant vector more appropriately in some cases by adding the displacement vector of the second vertex and the displacement vector of the third vertex with the different weights. For example, the weights for the displacement vector of the second vertex and the displacement vector of the third vertex can be appropriately set according to parameters of the encoding process. In this case, the resultant vector may be appropriately generated according to the parameters of the encoding process. This can contribute to an improvement in the encoding or decoding process. As a result, the decoding device can improve an encoding or decoding process related to three-dimensional data.

(9) The decoding device according to (6), in which the combined vector is generated by weighting and combining displacement vectors including the displacement vector of the second vertex and the displacement vector of the third vertex, and a sum of weighting factors is 1.

According to this aspect, the decoding device can reduce the amount of information in displacement data on a first vertex more easily in some cases by using a reference point that is set on the segment connecting the second vertex and the third vertex. As a result, the decoding device can improve an encoding or decoding process related to three-dimensional data.

(10) The decoding device according to (6), in which the combined vector is generated by weighting and combining displacement vectors including the displacement vector of the second vertex and the displacement vector of the third vertex, and a sum of weighting factors is not 1.

According to this aspect, the decoding device can reduce the amount of information in displacement data on a first vertex in some cases by using a reference point that is set at a position not on the segment connecting the second vertex and the third vertex. As a result, the decoding device can improve an encoding or decoding process related to three-dimensional data.

(11) An encoding method including: encoding, for each of vertices (P, Q, R) included in a three-dimensional mesh, displacement data to be used to derive a displacement vector (AP, BQ, YR), the displacement vector indicating a displacement from a first position (A, B, Y) of a vertex generated using a base mesh, in which the vertices include a first vertex (R), a second vertex (P), and a third vertex (Q), and the displacement data of the first vertex indicates a difference between the displacement vector of the first vertex and a combined vector of the displacement vector of the second vertex and the displacement vector of the third vertex.

This aspect produces the same advantageous effects as with the above encoding device.

(12) A decoding method including: decoding, for each of vertices (P, Q, R) included in a three-dimensional mesh, displacement data to be used to derive a displacement vector (AP, BQ, YR), the displacement vector indicating a displacement from a first position (A, B, Y) of a vertex generated using a base mesh, the vertices including a first vertex (R), a second vertex (P), and a third vertex (Q); and generating the displacement vector of the first vertex using the displacement data of the first vertex and a combined vector of the displacement vector of the second vertex and the displacement vector of the third vertex.

This aspect produces the same advantageous effects as with the above decoding device.

Moreover, these general or specific aspects may be implemented using a system, a device, a method, an integrated circuit, a computer program, or a non-transitory computer-readable recording medium such as a CD-ROM, or any combination of systems, devices, methods, integrated circuits, computer programs, and recording media.

<Expressions and terms>

The following expressions and terms will be used herein.

(1) Three-dimensional mesh

A three-dimensional mesh is a set of a plurality of faces and indicates, for example, a three-dimensional object. In addition, a three-dimensional mesh is mainly constituted of vertex information, connection information, and attribute information. A three-dimensional mesh may be expressed as a polygon mesh or a mesh. In addition, a three-dimensional mesh may have a temporal change. A three-dimensional mesh may include metadata related to vertex information, connection information, and attribute information or other additional information.

(2) Vertex information

Vertex information is information indicating a vertex. For example, vertex information indicates a position of a vertex in a three-dimensional space. In addition, a vertex corresponds to a vertex of a face that constitutes a three-dimensional mesh. Vertex information may be expressed as "geometry". In addition, vertex information may also be expressed as position information.

(3) Connection information

Connection information is information indicating a connection between vertexes. For example, connection information indicates a connection for constructing a face or an edge of a three-dimensional mesh. Connection information may be expressed as "connectivity". In addition, connection information may also be expressed as face information.

(4) Attribute information

Attribute information is information indicating an attribute of a vertex or a face. For example, attribute information indicates an attribute such as a color, an image, a normal vector, and the like associated with a vertex or a face. Attribute information may be expressed as "texture".

(5) Face

A face is an element that constitutes a three-dimensional mesh. Specifically, a face is a polygon on a plane in a three-dimensional space. For example, a face can be determined as a triangle in the three-dimensional space.

(6) Plane

A plane is a two-dimensional plane in a three-dimensional space. For example, a polygon is formed on a plane and a plurality of polygons are formed on a plurality of planes.

(7) Bitstream

A bitstream corresponds to encoded information. A bitstream can also be expressed as a stream, an encoded bitstream, a compressed bitstream, or an encoded signal.

(8) Encoding and decoding

The expression "encode" may be replaced with expressions such as store, include, write, describe, signalize, send out, notify, save, or compress and such expressions may be interchangeably used. For example, encoding information may mean including information in a bitstream. In addition, encoding information in a bitstream may mean encoding the information and generating a bitstream that includes the encoded information.
In addition, the expression "decode" may be replaced with expressions such as read, interpret, scan, load, derive, acquire, receive, extract, restore, reconstruct, decompress, or expand and such expressions may be interchangeably used. For example, decoding information may mean acquiring information from a bitstream. In addition, decoding information from a bitstream may mean decoding the bitstream and acquiring information included in the bitstream.

(9) Ordinal numbers

**[0026]** In the description, an ordinal number such as first, second, or the like may be affixed to a constituent element or the like. Such ordinal numbers may be replaced as necessary. In addition, an ordinal number may be newly affixed to or removed from a constituent element or the like. Furthermore, the ordinal numbers may be affixed to elements in order to identify the elements and may not correspond to any meaningful order.

<Three-dimensional mesh>

FIG. 1 is a conceptual diagram illustrating a three-dimensional mesh according to the present embodiment. The three-dimensional mesh is constituted of a plurality of faces. For example, each face is a triangle. Vertexes of the triangles are determined in a three-dimensional space. In addition, a three-dimensional mesh indicates a three-dimensional object. Each face may have a color or an image.
FIG. 2 is a conceptual diagram illustrating basic elements of a three-dimensional mesh according to the present embodiment. The three-dimensional mesh is constituted of vertex information, connection information, and attribute information. Vertex information indicates a position of a vertex of a face in a three-dimensional space. Connection information indicates a connection between vertexes. A face can be identified based on vertex information and connection information. In other words, an uncolored three-dimensional object is formed in a three-dimensional space based on vertex information and connection information.
Attribute information may be associated with a vertex or associated with a face. Attribute information associated with a vertex may be expressed as "attribute per point". Attribute information associated with a vertex may indicate an attribute of the vertex itself or indicate an attribute of a face connected to the vertex.

For example, a color may be associated with a vertex as attribute information. The color associated with the vertex may be the color of the vertex or the color of a face connected to the vertex. The color of the face may be an average of a plurality of colors associated with a plurality of vertexes of the face. In addition, a normal vector may be associated with a vertex or a face as attribute information. Such a normal vector can express a front and a rear of a face.

In addition, a two-dimensional image may be associated with a face as attribute information. The two-dimensional image associated with a face is also expressed as a texture image or an "attribute map". In addition, information indicating mapping between a face and a two-dimensional image may be associated with the face as attribute information. Such information indicating mapping may be expressed as mapping information, vertex information of a texture image, texture coordinates, or an "attribute UV coordinate".

Furthermore, information on a color, an image, a moving image, and the like to be used as attribute information may be expressed as "parametric space".

A texture is reflected in a three-dimensional object based on such attribute information. In other words, a colored three-dimensional object is formed in a three-dimensional space based on vertex information, connection information, and attribute information.

Note that while attribute information is associated with a vertex or a face in the description given above, alternatively, attribute information may be associated with an edge.

FIG. 3 is a conceptual diagram illustrating mapping according to the present embodiment. For example, a region of a two-dimensional image on a two-dimensional plane can be mapped to a face of a three-dimensional mesh in a three-dimensional space. Specifically, coordinate information of a region in the two-dimensional image is associated with a face of the three-dimensional mesh. Accordingly, an image of the mapped region in the two-dimensional image is reflected in the face of the three-dimensional mesh.

The use of mapping enables a two-dimensional image to be used as attribute information to be separated from the three-dimensional mesh. For example, in encoding of the three-dimensional mesh, the two-dimensional image may be encoded based on an image encoding system or a video encoding system.

<System configuration>

FIG. 4 is a block diagram illustrating a configuration example of an encoding/decoding system according to the present embodiment. In FIG. 4, the encoding/decoding system includes encoding device 100 and decoding device 200.

For example, encoding device 100 acquires a three-dimensional mesh and encodes the three-dimensional mesh into a bitstream. In addition, encoding device 100 outputs the bitstream to network 300. For example, the bitstream includes an encoded three-dimensional mesh and control information for decoding the encoded three-dimensional mesh. Encoding of the three-dimensional mesh causes information of the three-dimensional mesh to be compressed.

Network 300 transmits the bitstream from encoding device 100 to decoding device 200. Network 300 may be the Internet, a wide area network (WAN), a local area network (LAN), or a combination thereof. Network 300 is not necessarily limited to two-way communication and may be a unidirectional communication network for terrestrial digital broadcasting, satellite broadcasting, or the like.

In addition, network 300 may be replaced with a recording medium such as a DVD (digital versatile disc), a BD (Blu-Ray Disc (registered trademark)), or the like.

Decoding device 200 acquires a bitstream and decodes a three-dimensional mesh from the bitstream. Decoding of the three-dimensional mesh causes information of the three-dimensional mesh to be expanded. For example, decoding device 200 decodes a three-dimensional mesh according to a decoding method corresponding to an encoding method used by encoding device 100 to encode the three-dimensional mesh. In other words, encoding device 100 and decoding device 200 perform encoding and decoding according to an encoding method and a decoding method which correspond to each other.

Note that the three-dimensional mesh before encoding can also be expressed as an original three-dimensional mesh. In addition, the three-dimensional mesh after decoding is also expressed as a reconstructed three-dimensional mesh.

<Encoding device>

FIG. 5 is a block diagram illustrating a configuration example of encoding device 100 according to the present embodiment. For example, encoding device 100 includes vertex information encoder 101, connection information encoder 102, and attribute information encoder 103.

Vertex information encoder 101 is an electric circuit which encodes vertex information. For example, vertex information encoder 101 encodes vertex information into a bitstream according to a format defined with respect to the vertex information.

Connection information encoder 102 is an electric circuit which encodes connection information. For example, connection information encoder 102 encodes connection information into a bitstream according to a format defined with respect to the connection information.

Attribute information encoder 103 is an electric circuit which encodes attribute information. For example, attribute information encoder 103 encodes attribute information into a bitstream according to a format defined with respect to the attribute information.

Variable-length coding or fixed length coding may be used for encoding vertex information, connection information, and attribute information. The variable-length coding may accommodate Huffman coding, context-adaptive binary arithmetic coding (CABAC), or the like.

Vertex information encoder 101, connection information encoder 102, and attribute information encoder 103 may be integrated. Alternatively, each of vertex information encoder 101, connection information encoder 102, and attribute information encoder 103 may be more finely segmentalized into a plurality of constituent elements.

FIG. 6 is a block diagram illustrating another configuration example of encoding device 100 according to the present embodiment. For example, in addition to the components illustrated in FIG. 5, encoding device 100 includes preprocessor 104 and postprocessor 105.

Preprocessor 104 is an electric circuit which performs processing before encoding of vertex information, connection information, and attribute information. For example, preprocessor 104 may perform transformation processing, demultiplexing, multiplexing, or the like with respect to a three-dimensional mesh before encoding. More specifically, for example, preprocessor 104 may demultiplex vertex information, connection information, and attribute information from the three-dimensional mesh before encoding.

Postprocessor 105 is an electric circuit which performs processing after the encoding of vertex information, connection information, and attribute information. For example, postprocessor 105 may perform transformation processing, demultiplexing, multiplexing, or the like with respect to vertex information, connection information, and attribute information after encoding. More specifically, for example, postprocessor 105 may multiplex vertex information, connection information, and attribute information after encoding into a bitstream. In addition, for example, postprocessor 105 may further perform variable-length coding with respect to vertex information, connection information, and attribute information after the encoding.

<Decoding device>

FIG. 7 is a block diagram illustrating a configuration example of decoding device 200 according to the present embodiment. For example, decoding device 200 includes vertex information decoder 201, connection information decoder 202, and attribute information decoder 203.

Vertex information decoder 201 is an electric circuit which decodes vertex information. For example, vertex information decoder 201 decodes vertex information from a bitstream according to a format defined with respect to the vertex information.

Connection information decoder 202 is an electric circuit which decodes connection information. For example, connection information decoder 202 decodes connection information from a bitstream according to a format defined with respect to the connection information.

Attribute information decoder 203 is an electric circuit which decodes attribute information. For example, attribute information decoder 203 decodes attribute information from a bitstream according to a format defined with respect to the attribute information.

Variable-length decoding or fixed length decoding may be used for decoding vertex information, connection information, and attribute information. The variable-length decoding may accommodate Huffman coding, context-adaptive binary arithmetic coding (CABAC), or the like.

Vertex information decoder 201, connection information decoder 202, and attribute information decoder 203 may be integrated. Alternatively, each of vertex information decoder 201, connection information decoder 202, and attribute information decoder 203 may be more finely segmentalized into a plurality of constituent elements.

FIG. 8 is a block diagram illustrating another configuration example of decoding device 200 according to the present embodiment. For example, in addition to the components illustrated in FIG. 7, decoding device 200 includes preprocessor 204 and postprocessor 205.

Preprocessor 204 is an electric circuit which performs processing before decoding of vertex information, connection information, and attribute information. For example, preprocessor 204 may perform transformation processing, demultiplexing, multiplexing, or the like with respect to a bitstream before decoding of vertex information, connection information, and attribute information.

More specifically, for example, preprocessor 204 may demultiplex, from a bitstream, a sub-bitstream corresponding to vertex information, a sub-bitstream corresponding to connection information, and a sub-bitstream corresponding to attribute information. In addition, for example, preprocessor 204 may perform variable-length decoding with respect to the bitstream in advance before decoding of vertex information, connection information, and attribute information.

Postprocessor 205 is an electric circuit which performs processing after the decoding of vertex information, connection information, and attribute information. For example, postprocessor 205 may perform transformation processing, demultiplexing, multiplexing, or the like with respect to vertex information, connection information, and attribute information after decoding. More specifically, for example, postprocessor 205 may multiplex vertex information, connection information, and attribute information after decoding into a three-dimensional mesh.

<Bitstream>

Vertex information, connection information, and attribute information are encoded and stored in a bitstream. A relationship between these pieces of information and the bitstream will be described below.

FIG. 9 is a conceptual diagram illustrating a configuration example of a bitstream according to the present embodiment. In this example, connection information, vertex information, and attribute information are integrated in the bitstream. For example, connection information, vertex information, and attribute information may be included in one file.

In addition, a plurality of portions of the pieces of information may be sequentially stored such as a first portion of connection information, a first portion of vertex information, a first portion of attribute information, a second portion of connection information, a second portion of vertex information, a second portion of attribute information, ... The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 10 is a conceptual diagram illustrating another configuration example of a bitstream according to the present embodiment. In the example, a plurality of files are included in a bitstream and connection information, vertex information, and attribute information are respectively stored in different files. While a file including connection information, a file including vertex information, and a file including attribute information are illustrated here, storage formats are not limited to this example. For example, two types of information among connection information, vertex information, and attribute information may be included in one file and the one remaining type of information may be included in another file.

Alternatively, the pieces of information can be stored by being divided into a larger number of files. For example, a plurality of portions of connection information may be stored in a plurality of files, a plurality of portions of vertex information may be stored in a plurality of files, and a plurality of portions of attribute information may be stored in a plurality of files. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 11 is a conceptual diagram illustrating another configuration example of a bitstream according to the present embodiment. In the example, a bitstream is constituted of a plurality of separable sub-bitstreams and connection information, vertex information, and attribute information are respectively stored in different sub-bitstreams.

While a sub-bitstream including connection information, a sub-bitstream including vertex information, and a sub-bitstream including attribute information are illustrated here, storage formats are not limited to this example.

For example, two types of information among connection information, vertex information, and attribute information may be included in one sub-bitstream and the one remaining type of information may be included in another sub-bitstream. Specifically, attribute information such as a two-dimensional image may be stored in a sub-bitstream conforming to an image coding system separately from a sub-bitstream of connection information and vertex information.

In addition, each sub-bitstream may include a plurality of files. Furthermore, a plurality of portions of connection information may be stored in a plurality of files, a plurality of portions of vertex information may be stored in a plurality of files, and a plurality of portions of attribute information may be stored in a plurality of files.

Furthermore, an order of storage of connection information, vertex information, and attribute information is not limited to the example illustrated in FIG. 9, FIG. 10, and FIG. 11, and an order of storage that differs from this example may be used. For example, vertex information, connection information, and attribute information may be stored in a bitstream in this order. Alternatively, in an order other than this order, e.g., in any of orders: connection information, attribute information, and vertex information; vertex information, attribute information, and connection information; attribute information, connection information, and vertex information; and attribute information, vertex information, and connection information, these pieces of information may be stored in a bitstream.

Furthermore, each of connection information, vertex information, and attribute information may be divided into a plurality of data items, and the plurality of data items may be stored in a bitstream in a periodic order or in a random order.

<Specific example>

FIG. 12 is a block diagram illustrating a specific example of the encoding/decoding system according to the present embodiment. In FIG. 12, the encoding/decoding system includes three-dimensional data encoding system 110, three-dimensional data decoding system 210, and external connector 310.

Three-dimensional data encoding system 110 includes controller 111, input/output processor 112, three-dimensional data encoder 113, three-dimensional data generator 115, and system multiplexer 114. Three-dimensional data decoding system 210 includes controller 211, input/output processor 212, three-dimensional data decoder 213, system demultiplexer 214, presenter 215, and user interface 216.

In three-dimensional data encoding system 110, sensor data is input from a sensor terminal to three-dimensional data generator 115. Three-dimensional data generator 115 generates three-dimensional data that is point cloud data, mesh data, or the like from the sensor data and inputs the three-dimensional data to three-dimensional data encoder 113.

For example, three-dimensional data generator 115 generates vertex information and generates connection information and attribute information which correspond to the vertex information. Three-dimensional data generator 115 may process vertex information when generating connection information and attribute information. For example, three-dimensional data generator 115 may reduce a data amount by deleting overlapping vertexes or transform vertex information (position shift, rotation, normalization, or the like). In addition, three-dimensional data generator 115 may render attribute information.

While three-dimensional data generator 115 is a constituent element of three-dimensional data encoding system 110 in FIG. 12, three-dimensional data generator 115 may be disposed on the outside independent of three-dimensional data encoding system 110.

For example, a sensor terminal that provides sensor data for generating three-dimensional data may be a mobile object such as an automobile, a flying object such as an airplane, a mobile terminal, a camera, or the like. Alternatively, a range sensor such as LIDAR, a millimeter-wave radar, an infrared sensor, or a range finder, a stereo camera, a combination of a plurality of monocular cameras, or the like may be used as the sensor terminal.

The sensor data may be a distance (position) of an object, a monocular camera image, a stereo camera image, a color, a reflectance, an attitude or an orientation of a sensor, a gyro, a sensing position (GPS information or elevation), a velocity, an acceleration, a time of day of sensing, air temperature, air pressure, humidity, magnetism, or the like.

Three-dimensional data encoder 113 corresponds to encoding device 100 illustrated in FIG. 5 and the like. For example, three-dimensional data encoder 113 encodes three-dimensional data and generates encoded data. In addition, three-dimensional data encoder 113 generates control information when encoding the three-dimensional data. Furthermore, three-dimensional data encoder 113 inputs the encoded data to system multiplexer 114 together with the control information.

The encoding system of three-dimensional data may be an encoding system using geometry or an encoding system using a video codec. In this case, an encoding system using geometry may also be expressed as a geometry-based encoding system. An encoding system using a video codec may also be expressed as a video-based encoding system.

System multiplexer 114 multiplexes encoded data and control information input from three-dimensional data encoder 113 and generates multiplexed data using a prescribed multiplexing system. System multiplexer 114 may multiplex other media such as video, audio, subtitles, application data, or document files, reference time information, or the like together with the encoded data and control information of three-dimensional data. Furthermore, system multiplexer 114 may multiplex attribute information related to sensor data or three-dimensional data.

For example, multiplexed data has a file format for accumulation, a packet format for transmission, or the like. ISOBMFF or an ISOBMFF-based system may be used as an accumulation system or a transmission system. Alternatively, MPEG-DASH, MMT, MPEG-2 TS Systems, RTP, or the like may be used.

In addition, multiplexed data is output as a transmission signal by input/output processor 112 to external connector 310. The multiplexed data may be transmitted as a transmission signal in a wired manner or in a wireless manner. Alternatively, the multiplexed data is accumulated in an internal memory or a storage device. The multiplexed data may be transmitted via the Internet to a cloud server or stored in an external storage device.

For example, the transmission or accumulation of the multiplexed data is performed by a method in accordance with a medium for transmission or accumulation such as broadcasting or communication. As a communication protocol, http, ftp, TCP, UDP, IP, or a combination thereof may be used. In addition, a pull-type communication scheme may be used or a push-type communication scheme may be used.

Ethernet (registered trademark), USB, RS-232C, HDMI (registered trademark), a coaxial cable, or the like may be used for wired transmission. In addition, 3GPP (registered trademark), 3G/4G/5G as specified by IEEE, a wireless LAN, Bluetooth, or a millimeter-wave may be used for wireless transmission. Furthermore, for example, DVB-T2, DVB-S2, DVB-C2, ATSC 3.0, ISDB-S3, or the like may be used as a broadcasting system.

Note that sensor data may be input to three-dimensional data generator 115 or system multiplexer 114. In addition, three-dimensional data or encoded data may be output as-is as a transmission signal to external connector 310 via input/output processor 112. The transmission signal output from three-dimensional data encoding system 110 is input to three-dimensional data decoding system 210 via external connector 310.

In addition, each operation of three-dimensional data encoding system 110 may be controlled by controller 111 which executes application programs.

In three-dimensional data decoding system 210, a transmission signal is input to input/output processor 212. Input/output processor 212 decodes multiplexed data having a file format or a packet format from the transmission signal and inputs the multiplexed data to system demultiplexer 214. System demultiplexer 214 acquires encoded data and control information from the multiplexed data and inputs the encoded data and the control information to three-dimensional data decoder 213. System demultiplexer 214 may extract other media, reference time information, or the like from the multiplexed data.

Three-dimensional data decoder 213 corresponds to decoding device 200 illustrated in FIG. 7 and the like. For example, three-dimensional data decoder 213 decodes three-dimensional data from the encoded data based on an encoding system specified in advance. Subsequently, the three-dimensional data is presented to a user by presenter 215.

In addition, additional information such as sensor data may be input to presenter 215. Presenter 215 may present three-dimensional data based on the additional information. In addition, an instruction by the user may be input to user interface 216 from a user terminal. Furthermore, presenter 215 may present three-dimensional data based on the input instruction.

Note that input/output processor 212 may acquire three-dimensional data and encoded data from external connector 310.

In addition, each operation of three-dimensional data decoding system 210 may be controlled by controller 211 which executes application programs.

FIG. 13 is a conceptual diagram illustrating a configuration example of point cloud data according to the present embodiment. Point cloud data refers to data of a point cloud that indicates a three-dimensional object.

Specifically, a point cloud is constituted of a plurality of points and has position information which indicates a three-dimensional coordinate position of each point and attribute information which indicates an attribute of each point. The position information is also expressed as geometry.

For example, a type of attribute information may be a color, a reflectance, or the like. Attribute information related to one type may be associated with one point, attribute information related to a plurality of different types may be associated with one point, or attribute information having a plurality of values with respect to a same type may be associated with one point.

FIG. 14 is a conceptual diagram illustrating a data file example of the point cloud data according to the present embodiment. The example is an example of a case where items of position information and items of attribute information have a one-to-one correspondence and the example indicates position information and attribute information of N-number of points which constitute the point cloud data. In this example, position information is information indicating a three-dimensional coordinate position by three axes of x, y, and z and attribute information is information indicating a color by RGB. As a representative data file of point cloud data, a PLY file or the like can be used.

FIG. 15 is a conceptual diagram illustrating a configuration example of mesh data according to the present embodiment. Mesh data is data used in CG (computer graphics) or the like and is data of a three-dimensional mesh which represents a three-dimensional shape of an object by a plurality of faces. Each face is also expressed as a polygon and has a polygonal shape such as a triangle or a quadrilateral.

Specifically, in addition to the plurality of points which constitute a point cloud, a three-dimensional mesh is constituted of a plurality of edges and a plurality of faces. Each point is also expressed as a vertex or a position. Each edge corresponds to a line segment which connects two vertexes. Each face corresponds to an area enclosed by three or more edges.

In addition, a three-dimensional mesh has position information indicating three-dimensional coordinate positions of vertexes. The position information is also expressed as vertex information or geometry. Furthermore, a three-dimensional mesh has connection information indicating a relationship among a plurality of vertexes constituting an edge or a face. The connection information is also expressed as connectivity. In addition, a three-dimensional mesh has attribute information indicating an attribute with respect to a vertex, an edge, or a face. The attribute information in a three-dimensional mesh is also expressed as a texture.

For example, attribute information may indicate a color, a reflectance, or a normal vector with respect to a vertex, an edge, or a face. An orientation of a normal vector can express a front and a rear of a face.

An object file or the like may be used as a data file format of mesh data.

FIG. 16 is a conceptual diagram illustrating a data file example of the mesh data according to the present embodiment. In the example, a data file includes pieces of position information G(1) to G(N) and pieces of attribute information A1(1) to A1(N) of N-number of vertexes which constitute a three-dimensional mesh. In addition, in the example, M-number of pieces of attribute information A2(1) to A2(M) are included. An item of attribute information need not correspond one-to-one to a vertex and need not correspond one-to-one to a face. In addition, attribute information need not exist.

Connection information is indicated by a combination of indexes of vertexes. n [1, 3, 4] indicates a face of a triangle constituted of three vertexes n = 1, n = 3, and n = 4. In addition, m [2, 4, 6] indicates that pieces of attribute information m = 2, m = 4, and M = 6 respectively correspond to the three vertexes.

In addition, a substantive content of the attribute information may be described in a separate file. Furthermore, a pointer with respect to the content may be associated with a vertex, a face, or the like. For example, attribute information indicating an image with respect to a face may be stored in a two-dimensional attribute map file. In addition, a file name of the attribute map and a two-dimensional coordinate value in the attribute map may be described in pieces of attribute information A2(1) to A2(M). Methods of designating attribute information with respect to a face are not limited to these methods and any kind of method may be used.

FIG. 17 is a conceptual diagram illustrating a type of three-dimensional data according to the present embodiment. Point cloud data and mesh data may either indicate a static object or a dynamic object. A static object is an object that does not temporally change and a dynamic object is an object that temporally changes. A static object may correspond to three-dimensional data with respect to an arbitrary time point.

For example, point cloud data with respect to an arbitrary time point may be expressed as a PCC frame. In addition, mesh data with respect to an arbitrary time point may be expressed as a mesh frame. Furthermore, a PCC frame and a mesh frame may be simply expressed as a frame.

In addition, an area of an object may be limited to a certain range in a similar manner to ordinary video data or need not be limited in a similar manner to map data. Furthermore, a density of points or faces may be set in various ways. Sparse point cloud data or sparse mesh data may be used or dense point cloud data or dense mesh data may be used.

Next, encoding and decoding of a point cloud or a three-dimensional mesh will be described. A device, processing, or a syntax for encoding and decoding vertex information of a three-dimensional mesh according to the present disclosure may be applied to the encoding and decoding of a point cloud. A device, processing, or a syntax for encoding and decoding a point cloud according to the present disclosure may be applied to the encoding and decoding of vertex information of a three-dimensional mesh.

In addition, a device, processing, or a syntax for encoding and decoding attribute information of a point cloud according to the present disclosure may be applied to the encoding and decoding of connection information or attribute information of a three-dimensional mesh. Furthermore, a device, processing, or a syntax for encoding and decoding connection information or attribute information of a three-dimensional mesh according to the present disclosure may be applied to the encoding and decoding of attribute information of a point cloud.

Furthermore, at least a part of processing may be commonalized between the encoding and decoding of point cloud data and the encoding and decoding of mesh data. Accordingly, sizes of circuits and software programs can be suppressed.

FIG. 18 is a block diagram illustrating a configuration example of three-dimensional data encoder 113 according to the present embodiment. In this example, three-dimensional data encoder 113 includes vertex information encoder 121, attribute information encoder 122, metadata encoder 123, and multiplexer 124. Vertex information encoder 121, attribute information encoder 122, and multiplexer 124 may correspond to vertex information encoder 101, attribute information encoder 103, postprocessor 105, and the like illustrated in FIG. 6.

In addition, in this example, three-dimensional data encoder 113 encodes three-dimensional data according to a geometry-based encoding system. Encoding according to the geometry-based encoding system takes a three-dimensional structure into consideration. Furthermore, in encoding according to the geometry-based encoding system, attribute information is encoded using configuration information obtained during encoding of vertex information.

Specifically, first, vertex information, attribute information, and metadata included in three-dimensional data generated from sensor data are respectively input to vertex information encoder 121, attribute information encoder 122, and metadata encoder 123. In this case, connection information included in three-dimensional data may be handled in a similar manner to attribute information. In addition, in the case of point cloud data, position information may be handled as vertex information.

Vertex information encoder 121 encodes vertex information into compressed vertex information and outputs the compressed vertex information to multiplexer 124 as encoded data. In addition, vertex information encoder 121 generates metadata of the compressed vertex information and outputs the metadata to multiplexer 124. Furthermore, vertex information encoder 121 generates configuration information and outputs the configuration information to attribute information encoder 122.

Attribute information encoder 122 encodes attribute information into compressed attribute information using the configuration information generated by vertex information encoder 121 and outputs the compressed attribute information to multiplexer 124 as encoded data. In addition, attribute information encoder 122 generates metadata of the compressed attribute information and outputs the metadata to multiplexer 124.

Metadata encoder 123 encodes compressible metadata into compressed metadata and outputs the compressed metadata to multiplexer 124 as encoded data. The metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 19 is a block diagram illustrating a configuration example of three-dimensional data decoder 213 according to the present embodiment. In this example, three-dimensional data decoder 213 includes vertex information decoder 221, attribute information decoder 222, metadata decoder 223, and demultiplexer 224. Vertex information decoder 221, attribute information decoder 222, and demultiplexer 224 may correspond to vertex information decoder 201, attribute information decoder 203, preprocessor 204, and the like illustrated in FIG. 8.

In addition, in this example, three-dimensional data decoder 213 decodes three-dimensional data according to a geometry-based encoding system. Decoding according to the geometry-based encoding system takes a three-dimensional structure into consideration. Furthermore, in decoding according to the geometry-based encoding system, attribute information is decoded using configuration information obtained during decoding of vertex information.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information and the metadata of the compressed vertex information are input to vertex information decoder 221. The compressed attribute information and the metadata of the compressed attribute information are input to attribute information decoder 222. The metadata is input to metadata decoder 223.

Vertex information decoder 221 decodes vertex information from the compressed vertex information using the metadata of the compressed vertex information. In addition, vertex information decoder 221 generates configuration information and outputs the configuration information to attribute information decoder 222. Attribute information decoder 222 decodes attribute information from the compressed attribute information using the configuration information generated by vertex information decoder 221 and the metadata of the compressed attribute information. Metadata decoder 223 decodes metadata from the compressed metadata. The metadata decoded by metadata decoder 223 may be used to decode vertex information and to decode attribute information.

Subsequently, the vertex information, the attribute information, and the metadata are output from three-dimensional data decoder 213 as three-dimensional data. For example, the metadata is metadata of vertex information and attribute information and can be used in an application program.

FIG. 20 is a block diagram illustrating another configuration example of three-dimensional data encoder 113 according to the present embodiment. In this example, three-dimensional data encoder 113 includes vertex image generator 131, attribute image generator 132, metadata generator 133, video encoder 134, metadata encoder 123, and multiplexer 124. Vertex image generator 131, attribute image generator 132, and video encoder 134 may correspond to vertex information encoder 101, attribute information encoder 103, and the like illustrated in FIG. 6.

In addition, in this example, three-dimensional data encoder 113 encodes three-dimensional data according to a video-based encoding system. In encoding according to the video-based encoding system, a plurality of two-dimensional images are generated from three-dimensional data and the plurality of two-dimensional images are encoded according to a video encoding system. In this case, the video encoding system may be HEVC (high efficiency video coding), VVC (versatile video coding), or the like.

Specifically, first, vertex information and attribute information included in three-dimensional data generated from sensor data are input to metadata generator 133. In addition, the vertex information and the attribute information are respectively input to vertex image generator 131 and attribute image generator 132. Furthermore, the metadata included in the three-dimensional data is input to metadata encoder 123. In this case, connection information included in three-dimensional data may be handled in a similar manner to attribute information. In addition, in the case of point cloud data, position information may be handled as vertex information.

Metadata generator 133 generates map information of a plurality of two-dimensional images from the vertex information and the attribute information. In addition, metadata generator 133 inputs the map information into vertex image generator 131, attribute image generator 132, and metadata encoder 123.

Vertex image generator 131 generates a vertex image based on the vertex information and the map information and inputs the vertex image into video encoder 134. Attribute image generator 132 generates an attribute image based on the attribute information and the map information and inputs the attribute image into video encoder 134.

Video encoder 134 respectively encodes the vertex image and the attribute image into compressed vertex information and compressed attribute information according to the video encoding system and outputs the compressed vertex information and the compressed attribute information to multiplexer 124 as encoded data. In addition, video encoder 134 generates metadata of the compressed vertex information and metadata of the compressed attribute information and outputs the pieces of metadata to multiplexer 124.

Metadata encoder 123 encodes compressible metadata into compressed metadata and outputs the compressed metadata to multiplexer 124 as encoded data. Compressible metadata includes map information. In addition, the metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 21 is a block diagram illustrating another configuration example of three-dimensional data decoder 213 according to the present embodiment. In this example, three-dimensional data decoder 213 includes vertex information generator 231, attribute information generator 232, video decoder 234, metadata decoder 223, and demultiplexer 224. Vertex information generator 231, attribute information generator 232, and video decoder 234 may correspond to vertex information decoder 201, attribute information decoder 203, and the like illustrated in FIG. 8.

In addition, in this example, three-dimensional data decoder 213 decodes three-dimensional data according to a video-based encoding system. In decoding according to the video-based encoding system, a plurality of two-dimensional images are decoded according to a video encoding system and three-dimensional data is generated from the plurality of two-dimensional images. In this case, the video encoding system may be HEVC (high efficiency video coding), VVC (versatile video coding), or the like.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information, the metadata of the compressed vertex information, the compressed attribute information, and the metadata of the compressed attribute information are input to video decoder 234. The compressed metadata is input to metadata decoder 223.

Video decoder 234 decodes a vertex image according to the video encoding system. In doing so, video decoder 234 decodes the vertex image from the compressed vertex information using the metadata of the compressed vertex information. In addition, video decoder 234 inputs the vertex image into vertex information generator 231. Furthermore, video decoder 234 decodes an attribute image according to the video encoding system. In doing so, video decoder 234 decodes the attribute image from the compressed attribute information using the metadata of the compressed attribute information. In addition, video decoder 234 inputs the attribute image into attribute information generator 232.

Metadata decoder 223 decodes metadata from the compressed metadata. The metadata decoded by metadata decoder 223 includes map information to be used to generate vertex information and to generate attribute information. In addition, the metadata decoded by metadata decoder 223 may be used to decode the vertex image and to decode the attribute image.

Vertex information generator 231 reproduces vertex information from the vertex image according to the map information included in the metadata decoded by metadata decoder 223. Attribute information generator 232 reproduces attribute information from the attribute image according to the map information included in the metadata decoded by metadata decoder 223.

Subsequently, the vertex information, the attribute information, and the metadata are output from three-dimensional data decoder 213 as three-dimensional data. For example, the metadata is metadata of vertex information and attribute information and can be used in an application program.

FIG. 22 is a conceptual diagram illustrating a specific example of encoding processing according to the present embodiment. FIG. 22 illustrates three-dimensional data encoder 113 and description encoder 148. In this example, three-dimensional data encoder 113 includes two-dimensional data encoder 141 and mesh data encoder 142. Two-dimensional data encoder 141 includes texture encoder 143. Mesh data encoder 142 includes vertex information encoder 144 and connection information encoder 145.

Vertex information encoder 144, connection information encoder 145, and texture encoder 143 may correspond to vertex information encoder 101, connection information encoder 102, attribute information encoder 103, and the like illustrated in FIG. 6.

For example, two-dimensional data encoder 141 operates as texture encoder 143 and generates a texture file by encoding a texture corresponding to attribute information as two-dimensional data according to an image encoding system or a video encoding system.

In addition, mesh data encoder 142 operates as vertex information encoder 144 and connection information encoder 145 and generates a mesh file by encoding vertex information and connection information. Mesh data encoder 142 may further encode mapping information with respect to a texture. The encoded mapping information may be included in a mesh file.

In addition, description encoder 148 generates a description file by encoding a description corresponding to metadata such as text data. Description encoder 148 may encode a description in the system layer. For example, description encoder 148 may be included in system multiplexer 114 illustrated in FIG. 12.

Due to the operation described above, a bitstream including a texture file, a mesh file, and a description file is generated. The files may be multiplexed in the bitstream in a file format such as gITF (graphics language transmission format) or USD (universal scene description).

Note that three-dimensional data encoder 113 may include two mesh data encoders as mesh data encoder 142. For example, one mesh data encoder encodes vertex information and connection information of a static three-dimensional mesh and the other mesh data encoder encodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

FIG. 23 is a conceptual diagram illustrating a specific example of decoding processing according to the present embodiment. FIG. 23 illustrates three-dimensional data decoder 213, description decoder 248, and presenter 247. In this example, three-dimensional data decoder 213 includes two-dimensional data decoder 241, mesh data decoder 242, and mesh reconstructor 246. Two-dimensional data decoder 241 includes texture decoder 243. Mesh data decoder 242 includes vertex information decoder 244 and connection information decoder 245.

Vertex information decoder 244, connection information decoder 245, texture decoder 243, and mesh reconstructor 246 may correspond to vertex information decoder 201, connection information decoder 202, attribute information decoder 203, postprocessor 205, and the like illustrated in FIG. 8. Presenter 247 may correspond to presenter 215 and the like illustrated in FIG. 12.

For example, two-dimensional data decoder 241 operates as texture decoder 243 and decodes a texture corresponding to attribute information from a texture file as two-dimensional data according to an image encoding system or a video encoding system.

In addition, mesh data decoder 242 operates as vertex information decoder 244 and connection information decoder 245 and decodes vertex information and connection information from a mesh file. Mesh data decoder 242 may further decode mapping information with respect to a texture from the mesh file.

Furthermore, description decoder 248 decodes a description corresponding to metadata such as text data from a description file. Description decoder 248 may decode a description in the system layer. For example, description decoder 248 may be included in system demultiplexer 214 illustrated in FIG. 12.

Mesh reconstructor 246 reconstructs a three-dimensional mesh from vertex information, connection information, and a texture according to a description. Presenter 247 renders and outputs the three-dimensional mesh according to the description.

Due to the operation described above, a three-dimensional mesh is reconstructed and output from a bitstream including a texture file, a mesh file, and a description file.

Note that three-dimensional data decoder 213 may include two mesh data decoders as mesh data decoder 242. For example, one mesh data decoder decodes vertex information and connection information of a static three-dimensional mesh and the other mesh data decoder decodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

An encoding system of a dynamic three-dimensional mesh may be called DMC (dynamic mesh coding). In addition, a video-based encoding system of a dynamic three-dimensional mesh may be called VDMC (video-based dynamic mesh coding).

An encoding system of a point cloud may be called PCC (point cloud compression). A video-based encoding system of a point cloud may be called V-PCC (video-based point cloud compression). In addition, a geometry-based encoding system of a point cloud may be called G-PCC (geometry-based point cloud compression).

<Implementation example>

FIG. 24 is a block diagram illustrating an implementation example of encoding device 100 according to the present embodiment. Encoding device 100 includes circuit 151 and memory 152. For example, a plurality of constituent elements of encoding device 100 illustrated in FIG. 5 and the like are implemented by circuit 151 and memory 152 illustrated in FIG. 24.

Circuit 151 is a circuit which performs information processing and which is capable of accessing memory 152. For example, circuit 151 is a dedicated or general-purpose electric circuit which encodes a three-dimensional mesh. Circuit 151 may be a processor such as a CPU. Alternatively, circuit 151 may be a set of a plurality of electric circuits.

Memory 152 is a dedicated or general-purpose memory that stores information used by circuit 151 to encode a three-dimensional mesh. Memory 152 may be an electric circuit and may be connected to circuit 151. In addition, memory 152 may be included in circuit 151. Alternatively, memory 152 may be a set of a plurality of electric circuits. Furthermore, memory 152 may be a magnetic disk, an optical disk, or the like or may be expressed as a storage, a recording medium, or the like. In addition, memory 152 may be a non-volatile memory or a volatile memory.

For example, memory 152 may store a three-dimensional mesh or a bitstream. In addition, memory 152 may store a program used by circuit 151 to encode a three-dimensional mesh.

Note that in encoding device 100, all of the plurality of constituent elements illustrated in FIG. 5 and the like need not be implemented and all of the plurality of processing steps described herein need not be performed. A part of the plurality of constituent elements illustrated in FIG. 5 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in encoding device 100.

FIG. 25 is a block diagram illustrating an implementation example of decoding device 200 according to the present embodiment. Decoding device 200 includes circuit 251 and memory 252. For example, a plurality of constituent elements of decoding device 200 illustrated in FIG. 7 and the like are implemented by circuit 251 and memory 252 illustrated in FIG. 25.

Circuit 251 is a circuit which performs information processing and which is capable of accessing memory 252. For example, circuit 251 is a dedicated or general-purpose electric circuit which decodes a three-dimensional mesh. Circuit 251 may be a processor such as a CPU. Alternatively, circuit 251 may be a set of a plurality of electric circuits.

Memory 252 is a dedicated or general-purpose memory that stores information used by circuit 251 to decode a three-dimensional mesh. Memory 252 may be an electric circuit and may be connected to circuit 251. In addition, memory 252 may be included in circuit 251. Alternatively, memory 252 may be a set of a plurality of electric circuits. Furthermore, memory 252 may be a magnetic disk, an optical disk, or the like or may be expressed as a storage, a recording medium, or the like. In addition, memory 252 may be a non-volatile memory or a volatile memory.

For example, memory 252 may store a three-dimensional mesh or a bitstream. In addition, memory 252 may store a program used by circuit 251 to decode a three-dimensional mesh.

Note that in decoding device 200, all of the plurality of constituent elements illustrated in FIG. 7 and the like need not be implemented and all of the plurality of processing steps described herein need not be performed. A part of the plurality of constituent elements illustrated in FIG. 7 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in decoding device 200.

An encoding method and a decoding method including steps performed by each constituent element of encoding device 100 and decoding device 200 according to the present disclosure may be executed by any device or system. For example, a part of or all of the encoding method and the decoding method may be executed by a computer including a processor, a memory, an input/output circuit, and the like. In doing so, the encoding method and the decoding method may be executed by having the computer execute a program that enables the computer to execute the encoding method and the decoding method.

In addition, a program or a bitstream may be recorded on a non-transitory computer-readable recording medium such as a CD-ROM.

An example of a program may be a bitstream. For example, a bitstream including an encoded three-dimensional mesh includes a syntax element that enables decoding device 200 to decode the three-dimensional mesh. In addition, the bitstream causes decoding device 200 to decode the three-dimensional mesh according to the syntax element included in the bitstream. Therefore, a bitstream can perform a similar role to a program.

The bitstream described above may be an encoded bitstream including an encoded three-dimensional mesh or a multiplexed bitstream including an encoded three-dimensional mesh and other information.

In addition, each constituent element of encoding device 100 and decoding device 200 may be constituted of dedicated hardware, general-purpose hardware which executes the program or the like described above, or a combination thereof. Furthermore, the general-purpose hardware may be constituted of a memory on which a program is recorded, a general-purpose processor which reads the program from the memory and executes the program, and the like. In this case, the memory may be a semiconductor memory, a hard disk, or the like and the general-purpose processor may be a CPU or the like.

Furthermore, the dedicated hardware may be constituted of a memory, a dedicated processor, and the like. For example, the dedicated processor may execute the encoding method and the decoding method by referring to a memory for recording data.

In addition, as described above, the respective constituent elements of encoding device 100 and decoding device 200 may be electric circuits. The electric circuits may constitute one electric circuit as a whole or may be respectively different electric circuits. Furthermore, the electric circuits may correspond to dedicated hardware or to general-purpose hardware which executes the program or the like described above. Moreover, encoding device 100 and decoding device 200 may be implemented as integrated circuits.

In addition, encoding device 100 may be a transmitting device which transmits a three-dimensional mesh. Decoding device 200 may be a receiving device which receives a three-dimensional mesh.

<Encoding and decoding of displacement>

The following terms will be used here as examples.

(1) Image

An image is a data unit constituted of a set of pixels. An image includes a picture or blocks, which are smaller than a picture. Images include a still image in addition to a moving image.

(2) Picture

A picture is an image processing unit constituted of a set of pixels. A picture will also be referred to as a frame or a field.

(3) Block

A block is a processing unit constituted of a set of a particular number of pixels. For a block, the terms shown as the following examples are also used. The shapes of blocks are not particularly limited. Examples of blocks can include a rectangle shape of M × N pixels or a square shape of M × M pixels. The examples of blocks may also include a triangular shape, a circular shape, and other shapes. Examples of blocks are as follows.

- Slice, tile, or brick
- CTU, super block, or basic splitting unit
- VPDU, processing splitting unit for hardware
- CU, processing block unit, prediction block unit (PU), or orthogonal transform block unit (TU)
- Sub-block

(4) Pixel or sample

A pixel or a sample is the smallest point of an image, in other words, the smallest unit. Pixels or samples include not only a pixel at an integer position but also a pixel at a sub-pixel position that is generated based on a pixel at an integer position.

(5) Pixel value or sample value

A pixel value or a sample value is an eigen value of a pixel. Pixel values or sample values include a luma value, a chroma value, and an RGB gradation level. Pixel values or sample values can also include a depth value or a binary value of 0 or 1.

(6) Flag

A flag indicates one or more bits. A flag is, for example, a parameter or an index represented by two or more bits. A flag may indicate not only a value represented by a binary number but also a value represented by a numerical value other than a binary number.

(7) Signal

A signal is one that is symbolized or encoded to convey information. Signals include a discrete digital signal and an analog signal that takes a continuous value.

(8) Stream or bitstream

A stream or a bitstream is a digital data string indicating a digital data flow. A stream or a bitstream may be one stream or may be constituted of a plurality of streams having a plurality of hierarchical layers. A stream or a bitstream may be transmitted in serial communication using a single transmission path or may be transmitted in packet communication using a plurality of transmission paths.

(9) Difference

In the case of scalar quantities, a difference can include a simple difference $(x - y)$ and a difference calculation. Differences can include an absolute value of a difference $(|x - y|)$, a squared difference $(x^2 - y^2)$, a square root of a difference $(\sqrt{(x - y)})$, a weighted difference $(ax - by$: a and b are constants$)$, or an offset difference $(x - y + a$: a is an offset$)$.

(10) Sum

In the case of scalar quantities, sums can include a simple sum $(x + y)$ and a sum calculation. Sums include an absolute value of a sum $(|x + y|)$, a squared sum $(x^2 + y^2)$, a square root of a sum $(\sqrt{(x + y)})$, a weighted sum $(ax + by$: a and b are constants$)$, and an offset sum $(x + y + a$: a is an offset$)$.

(11) "Based on"

The phrase "based on something" means that a thing other than the "something" may be taken into consideration. In addition, the term "based on" may be used in a case where a direct result is obtained or a case where a result is obtained through an interim result.

(12) "Used" or "using"

The phrase "something is used" or "using something" means that a thing other than the "something" may be taken into consideration. In addition, the term "used" or "using" may be used in a case where a direct result is obtained or a case where a result is obtained through an interim result.

(13) Prohibit, forbid

The term "prohibit" or "forbid" can be rephrased as "does not permit" or "does not allow." In addition, the phrase "being not prohibited/forbidden" or "being permitted/allowed" does not always mean "obligation."

(14) "Limit", or "restriction/restrict/restricted"

The term "limit" or "restriction/restrict/restricted" can be rephrased as "does not permit/allow" or "being not permitted/allowed." In addition, the phrase "being prohibited/forbidden," "being not prohibited/forbidden," "being not permitted/allowed," or "being permitted/allowed" does not always mean "obligation." Furthermore, part of something may be prohibited/forbidden quantitatively or qualitatively, or something may be fully prohibited/forbidden quantitatively or qualitatively.

(15) Chroma

Chroma is an adjective that is represented by the symbols Cb and Cr, specifying that a sample array or a single sample represents one of two color difference signals related to primary colors. The term chroma may be used instead of the term chrominance.

(16) Luma

Luma is an adjective that is represented by the symbol or subscript Y or L, specifying that a sample array or a single sample represents a monochrome signal related to primary colors. The term luma may be used instead of the term luminance.

Hereinafter, an encoding/decoding system of the present embodiment will be described.

A generic three-dimensional model (also referred to as a 3D model) represents an object digitally such that a user can explorer a model using zooming, panning, and rotation in all three dimensions while rendering it temporally. One way to construct such a representation is to construct a 3D mesh using triangles. The model stores the positions of the vertices of each triangle, connectivity of the vertices of the triangle with each other, and the attributes associated therewith (such as a normal, UV patches, etc.).

Storing all of these types of information in an uncompressed form needs very large storage space, which in turn needs a very large bandwidth for transmission. The triangles forming the mesh often have a repetitive pattern and similar attributes especially in the temporal and spatial neighborhood. The repetition can be used to formulate an efficient encoding and decoding method for storage and transmission. One such encoding and decoding method is Videobased Dynamic Mesh Coding (V-DMC).

FIG. 26 is a block diagram illustrating another configuration example of the encoding/decoding system according to the present embodiment. As illustrated in FIG. 26, the encoding/decoding system includes encoding device 100 and decoding device 200.

The encoding/decoding system receives a three-dimensional mesh (also referred to as a 3D mesh) that is input in the form of three-dimensional coordinates (vertex information), connectivity (connection information), and associated attributes (attribute information) of vertices. Note that the 3D mesh can include not only geometry but also a texture map.

Encoding device 100 takes in the 3D mesh that has been input (also referred to as an input 3D mesh or an input mesh) in the form of the vertices' three-dimensional coordinates, connectivity, and associated attributes. Encoding device 100 is responsible for encoding all related information into a stream. The stream may include a single bitstream or a plurality of bitstreams.

Network 300 transmits the stream generated by the encoding device to decoding device 200. Network 300 may be the Internet, a wide area network (WAN), a local area network (LAN), or any combination of these networks. Network 300 is not always limited to a bidirectional communication network. Network 300 may be a unidirectional communication network that transmits broadcast waves of digital terrestrial broadcasting, satellite broadcasting, or the like. Alternatively, network 300 may be replaced by a recording medium such as a Digital Versatile Disc (DVD), a Blue-Ray Disc (BD), or the like on which the stream is recorded.

The stream is transmitted to decoding device 200 through network 300. Decoding device 200 decodes the bitstream to produce a three-dimensional mesh using the decoded vertices' three-dimensional coordinates, connectivity, and associated attributes. Decoding device 200 outputs the produced three-dimensional mesh (also referred to as an output 3D mesh or an output mesh).

FIG. 27 is a diagram illustrating another configuration example of encoding device 100.

As illustrated in FIG. 27, encoding device 100 includes preprocessor 1103 and compressor 1106.

Encoding device 100 reads input mesh 1101 and attribute map 1102 and passes them to preprocessor 1103. Preprocessor 1103 processes the input mesh to extract base mesh 1104 and displacement data 1105. Attribute map 1102 along with base mesh 1104 and displacement data 1105 having been extracted are passed to compressor 1106.

Compressor 1106 compresses base mesh 1104, displacement data 1105, and attribute map 1102 to generate bitstream 1107. Compressor 1106 can additionally include metadata 1108 in bitstream 1107 to send the supplementary information to decoding device 200.

FIG. 28 is a diagram illustrating another configuration example of decoding device 200.

As illustrated in FIG. 28, decoding device 200 includes decompressor 2102 and postprocessor 2106.

Decoding device 200 reads bitstream 2101 and passes it to decompressor 2102. Decompressor 2102 decompresses base mesh 2103, displacement data 2104, and attribute map 2108 from bitstream 2101 and passes them to postprocessor 2106. One example of displacement data 2104 is displacement vectors.

Postprocessor 2106 processes base mesh 2103 as per displacement data 2104 and attribute map 2108 to produce output mesh 2107. Postprocessor 2106 may additionally use information from metadata 2105 to produce output mesh 2107.

Hereinafter, details of the configuration of encoding device 100 will be described.

FIG. 29 is a block diagram illustrating a detailed configuration example of encoding device 100.

As illustrated in FIG. 29, encoding device 100 includes decimator 1201, quantizer 1202, base mesh encoder 1203, base mesh decoder 1204, inverse quantizer 1205, subdivider 1206, displacement vector calculator 1207, wavelet transformer 1208, quantizer 1209, image packer 1210, video encoder 1211, color converter 1212, video encoder 1213, and multiplexer 1214.

Decimator 1201 acquires a mesh that is input into encoding device 100 (equivalent to input mesh 1101) as an original mesh and performs a decimating process (in other words, a thinning-out process) on the acquired original mesh to produce a base mesh. The decimating process is a process of deleting (in other words, thinning out) some of vertices included in the original mesh. The decimating process may include a process of changing the positions of at least some of the vertices included in the original mesh or may include a process of changing the connectivity of at least some of the vertices included in the original mesh. The decimating process will also be referred to simply as decimating.

The base mesh produced through the decimating process is a mesh including fewer vertices than the original mesh. The vertices of the base mesh may be positioned differently from the vertices of the original mesh. In addition, the connectivity of the vertices of the base mesh may be different from the connectivity of the vertices of the original mesh. Decimator 1201 provides the produced base mesh to quantizer 1202.

Quantizer 1202 quantizes the base mesh produced by decimator 1201. Quantizer 1202 provides the quantized base mesh to base mesh encoder 1203.

Base mesh encoder 1203 encodes the base mesh quantized by quantizer 1202 into a bitstream (also referred to as a base mesh bitstream) (in other words, generates the base mesh bitstream). Base mesh encoder 1203 provides the base mesh bitstream to base mesh decoder 1204 and multiplexer 1214.

Base mesh decoder 1204 decodes the base mesh bitstream provided from base mesh encoder 1203 to acquire the quantized base mesh. Base mesh decoder 1204 provides the quantized base mesh to inverse quantizer 1205.

Inverse quantizer 1205 inverse quantizes the quantized base mesh provided from base mesh decoder 1204 to produce the base mesh (also referred to as a decoded base mesh). Inverse quantizer 1205 provides the decoded base mesh to subdivider 1206. The processes of quantization and inverse quantization may make the decoded base mesh produced by inverse quantizer 1205 different from the base mesh produced by decimator 1201.

Subdivider 1206 performs a subdivision process on the decoded base mesh produced by inverse quantizer 1205. The subdivision process can be a process of subdividing each face included in the decoded base mesh to segmentalize the face. Subdivider 1206 provides the subdivided, decoded base mesh to displacement vector calculator 1207.

Specifically, subdivider 1206 subdivides a mesh by generating a new vertex between two vertices that are included in the mesh and connected to each other. Repeating the generation of new vertex can increase the number of the vertices included in the mesh to a predetermined number. The iteration of the subdivision over the entire mesh (in other words, the plurality of executions of the subdivision) generates a plurality of levels of detail (LoD) layers.

Displacement vector calculator 1207 acquires the original mesh acquired by encoding device 100 and acquires, from subdivider 1206, the subdivided, decoded base mesh. Displacement vector calculator 1207 calculates vectors from the vertices of the subdivided, decoded base mesh to the vertices, faces, or edges of the original mesh, as displacement vectors. Displacement vector calculator 1207 provides the displacement vectors to wavelet transformer 1208.

Wavelet transformer 1208 performs a wavelet transforming process on the displacement vectors calculated by displacement vector calculator 1207 to acquire wavelet coefficients. Wavelet transformer 1208 provides the wavelet coefficients to quantizer 1209. In the wavelet transformation, wavelet transformer 1208 assigns the vertices to a plurality of LoD layers and applies, for example, the lifting scheme to the displacement vectors of the vertices. Wavelet transformer 1208 can thus calculate wavelet coefficients representing various components from low-frequency components to highfrequency components.

Quantizer 1209 quantizes the wavelet coefficients acquired by wavelet transformer 1208. Quantizer 1209 can quantize the wavelet coefficients for each LoD layer. Quantizer 1209 provides the quantized wavelet coefficients to image packer 1210.

Image packer 1210 generates an image containing the wavelet coefficients quantized by quantizer 1209. Image packer 1210 can generate the image by mapping the wavelet coefficients quantized by quantizer 1209 onto pixels in a two-dimensional image format. Image packer 1210 provides the generated image to video encoder 1211. In the process of mapping the quantized wavelet coefficients onto the pixels in the two-dimensional image format, mapping information that represents the assignment of the quantized wavelet coefficients to the pixels in the two-dimensional image format can be used.

Video encoder 1211 encodes the image generated by image packer 1210 into a bitstream (also referred to as a displacement bitstream) (in other words, generates the displacement bitstream). Video encoder 1211 provides the displacement bitstream to multiplexer 1214. The displacement bitstream can be a bitstream including displacement information in the form of an image. The format of the image can be, for example, a format including two items of chroma information and one item of luma information.

Color converter 1212 acquires an attribute map acquired by encoding device 100 as an original attribute map and performs a color converting process on the original attribute map. The color converting process can include a process of converting a representation form of color or a color space. Color converter 1212 provides the attribute map subjected to the color converting process to video encoder 1213. Note that although here is described the case where the original attribute map is input into color converter 1212 by way of example, the feature map may be converted in accordance with the structure of the decoded mesh in the case where the decoded mesh differs from the original mesh in the number or positions of the vertices.

Video encoder 1213 encodes the attribute map converted by color converter 1212 into a bitstream (also referred to as an attribute bitstream) (in other words, generates the attribute bitstream). Video encoder 1213 provides the attribute bitstream to multiplexer 1214.

Multiplexer 1214 acquires the base mesh bitstream from base mesh encoder 1203, acquires the displacement bitstream from video encoder 1211, acquires the attribute bitstream from video encoder 1213, and multiplexes these bitstreams to generate and output a compressed bitstream. Outputting the compressed bitstream by multiplexer 1214 can be equivalent to outputting of the bitstream by encoding device 100.

Note that the process of encoding the wavelet coefficients into the displacement bitstream, which is executed by image packer 1210 and video encoder 1211, may be performed through an arithmetic encoding process. In addition, encoding device 100 may be configured to be capable of selecting whether the process is to be executed through the process by image packer 1210 and video encoder 1211 (also referred to as a video encoding process) or executed through the arithmetic encoding process. An example of such a configuration will be described below.

FIG. 30 is a block diagram illustrating a detailed configuration variation of encoding device 100. FIG. 30 illustrates a variation of the functional blocks enclosed by the dotted-line frame illustrated in FIG. 29.

Displacement vector calculator 1207, wavelet transformer 1208, quantizer 1209, image packer 1210, and video encoder 1211 illustrated in FIG. 30 are the same as those illustrated in FIG. 29.

As illustrated in FIG. 30, encoding device 100 further includes switcher 1221, switcher 1222, and arithmetic encoder 1223.

Switcher 1221 and switcher 1222 are switchers that switch whether image packer 1210 and video encoder 1211 or arithmetic encoder 1223 is to execute the process of encoding the wavelet coefficients into the displacement bitstream.

Switcher 1221 and switcher 1222 may dynamically switch a constituent component that is to execute the process to image packer 1210 and video encoder 1211 or arithmetic encoder 1223. Switcher 1221 and switcher 1222 may be configured to always (in other words, fixedly) use image packer 1210 and video encoder 1211 as the constituent component that is to execute the process or may be configured to always (in other words, fixedly) use arithmetic encoder 1223 as the constituent component.

Arithmetic encoder 1223 executes the process of encoding the wavelet coefficients into the displacement bitstream by means of arithmetic encoding.

Note that encoding device 100 may add, to header information, information indicating whether the process of encoding the wavelet coefficients into the displacement bitstream has been executed by image packer 1210 and video encoder 1211 (in other words, the process has been executed through the video encoding process) or by arithmetic encoder 1223 (in other words, the process has been executed through the arithmetic encoding process). This enables decoding device 200 receiving the bitstream encoded in the above manner to appropriately decode the bitstream by switching decoding methods of decoding the bitstream with reference to the header information.

Hereinafter, an encoding process performed by encoding device 100 will be described in detail.

FIG. 31 is a flowchart illustrating the process by encoding device 100. FIG. 32 is an explanatory diagram schematically illustrating the encoding of a mesh frame. With reference to FIG. 31 and FIG. 32, the process by encoding device 100 will be described.

In step S101, encoding device 100 reads a 3D mesh frame, which is an input mesh frame, and its attributes. The input mesh frame is a mesh frame input into encoding device 100. An example of the 3D mesh frame being the input mesh frame is illustrated as mesh frame 1301 (see FIG. 32).

In step S102, encoding device 100 performs the decimating process on the input mesh frame that is read in step S101 to produce a base mesh frame, which has a smaller number of vertices than the input mesh frame. The base mesh frame produced by decimating mesh frame 1301 is illustrated as base mesh frame 1302 (see FIG. 32).

In step S103, encoding device 100 calculates displacement information to be used by decoding device 200 to reconstruct the mesh frame. The displacement information is equivalent to displacement vectors from the vertices of the base mesh frame produced in step S102 to the vertices of the input mesh frame. Methods of calculating the displacement information include a method in which the sets of coordinates of the vertices of the base mesh frame are subtracted from the coordinates of the vertices of the input mesh frame. The displacement information calculated from mesh frame 1301 and base mesh frame 1302 is illustrated as displacement information 1303 (see FIG. 32). Displacement information 1303 is in a vector format. In other words, displacement information 1303 is represented as displacement vectors.

In step S104, encoding device 100 encodes the base mesh frame produced in step S102, the displacement information generated in step S103, and the attributes of the input mesh frame into a bitstream (equivalent to a compressed bitstream). An example of the bitstream is illustrated as bitstream 1304 (see FIG. 32).

Specifically, bitstream 1304 includes sets of vertex coordinates of and connection information on vertices A, C, E, and F, the displacement information, a video bitstream including texture data, and a compressed attribute map (see FIG. 32). The displacement information includes displacement information for displacing vertices based on the vertex coordinates acquired from the base mesh frame that has been subdivided. The compressed attribute map includes texture coordinates used to apply the texture data to the mesh frame that is reconstructed using the base mesh frame and the displacement information.

Hereinafter, details of the configuration of decoding device 200 will be described.

FIG. 33 is a block diagram illustrating a detailed configuration example of decoding device 200.

As illustrated in FIG. 33, decoding device 200 includes demultiplexer 2201, base mesh decoder 2202, inverse quantizer 2203, subdivider 2204, video decoder 2205, image unpacker 2206, inverse quantizer 2207, inverse wavelet transformer 2208, reconstructor 2209, video decoder 2210, and color converter 2211.

Demultiplexer 2201 acquires a compressed bitstream input into decoding device 200 and separates a base mesh bitstream, a displacement bitstream, and an attribute bitstream from the compressed bitstream. Demultiplexer 2201 provides the base mesh bitstream to base mesh decoder 2202, provides the displacement bitstream to video decoder 2205, and provides the attribute bitstream to video decoder 2210. The compressed bitstream input into decoding device 200 can be, for example, a compressed bitstream output by encoding device 100. The description will be made on this case as an example.

Base mesh decoder 2202 decodes the base mesh bitstream provided from demultiplexer 2201 to acquire a quantized base mesh. Base mesh decoder 2202 provides the quantized base mesh to inverse quantizer 2203.

Inverse quantizer 2203 inverse quantizes the quantized base mesh provided from base mesh decoder 2202 to produce the base mesh (also referred to as a decoded base mesh). Inverse quantizer 2203 provides the decoded base mesh to subdivider 2204.

Subdivider 2204 performs the subdivision process on the decoded base mesh produced by inverse quantizer 2203. The subdivision process is the same as the subdivision process executed by subdivider 1206. Subdivider 2204 provides the subdivided, decoded base mesh to reconstructor 2209.

Video decoder 2205 decodes displacement bitstream provided from demultiplexer 2201 into an image. The image can be an image in which quantized wavelet coefficients are contained by the mapping of the quantized wavelet coefficients onto pixels in a two-dimensional image format. Video decoder 2205 provides the image to image unpacker 2206.

Image unpacker 2206 takes out the quantized wavelet coefficients from the image provided from video decoder 2205. In the process of taking out the quantized wavelet coefficients from the image, a mapping that represents the assignment of the quantized wavelet coefficients to the pixels in the two-dimensional image format can be used. Image unpacker 2206 provides the quantized wavelet coefficients taken out from the image to inverse quantizer 2207.

Inverse quantizer 2207 inverse quantizes the quantized wavelet coefficients provided from image unpacker 2206 to generate wavelet coefficients.

Inverse wavelet transformer 2208 performs an inverse wavelet transforming process on the wavelet coefficients provided from inverse quantizer 2207 to generate displacement vectors (equivalent to decoded displacement vectors). The inverse wavelet transforming process is equivalent to the inverse transform of the wavelet transforming process performed by wavelet transformer 1208. Inverse wavelet transformer 2208 provides the generated decoded displacement vectors to reconstructor 2209.

Reconstructor 2209 reconstructs a mesh (equivalent to a decoded mesh) using the subdivided, decoded base mesh provided from subdivider 2204 and the decoded displacement vectors provided from inverse wavelet transformer 2208. Reconstructor 2209 outputs the reconstructed, decoded mesh as output mesh 2107.

Video decoder 2210 decodes the attribute bitstream provided from demultiplexer 2201 into an attribute map (equivalent to a decoded attribute map). Video decoder 2210 provides the decoded attribute map to color converter 2211.

Color converter 2211 performs a color converting process on the decoded attribute map provided from video decoder 2210. The color converting process is equivalent to the inverse conversion of the color converting process executed by color converter 1212 and can include a process of converting a representation form of color or a color space. Color converter 2211 outputs the decoded attribute map subjected to the color converting process.

Note that the process of decoding the displacement bitstream into the wavelet coefficients, which is executed by video decoder 2205 and image unpacker 2206, may be performed through an arithmetic encoding process. In addition, decoding device 200 may be configured to be capable of selecting whether the process is to be executed through the process by video decoder 2205 and image unpacker 2206 (also referred to as a video decoding process) or executed through the arithmetic encoding process. An example of such a configuration will be described below.

FIG. 34 is a block diagram illustrating a detailed configuration variation of decoding device 200. FIG. 34 illustrates a variation of the functional blocks enclosed by the dotted-line frame illustrated in FIG. 33.

Video decoder 2205, image unpacker 2206, inverse quantizer 2207, inverse wavelet transformer 2208, and reconstructor 2209 illustrated in FIG. 34 are the same as those illustrated in FIG. 33.

As illustrated in FIG. 34, decoding device 200 further includes switcher 2221, switcher 2222, and arithmetic decoder 2223.

Switcher 2221 and switcher 2222 are switchers that switch whether video decoder 2205 and image unpacker 2206 or arithmetic decoder 2223 is to execute the process of decoding the displacement bitstream into the wavelet coefficients.

Switcher 2221 and switcher 2222 may dynamically switch a constituent component that is to execute the process to video decoder 2205 and image unpacker 2206 or arithmetic decoder 2223. Switcher 2221 and switcher 2222 may be configured to always (in other words, fixedly) use video decoder 2205 and image unpacker 2206 as the constituent component that is to execute the process or may be configured to always (in other words, fixedly) use arithmetic decoder 2223 as the constituent component.

Arithmetic decoder 2223 executes the process of decoding the displacement bitstream into the wavelet coefficients by means of arithmetic decoding.

Note that information indicating whether video decoder 2205 and image unpacker 2206 or arithmetic decoder 2223 has executed the process of decoding the displacement bitstream into the wavelet coefficients (in other words, whether the process has been executed through the video decoding process or the arithmetic decoding process) may have been added to header information. In this case, decoding device 200 can appropriately decode the bitstream by switching the decoding methods of decoding the bitstream with reference to the header information.

Hereinafter, a decoding process performed by decoding device 200 will be described in detail.

FIG. 35 is a flowchart illustrating the process by decoding device 200. FIG. 36 is an explanatory diagram schematically illustrating the decoding of a 3D mesh. With reference to FIG. 35 and FIG. 36, the process by decoding device 200 will be described.

In step S201, decoding device 200 decodes a base mesh frame and attributes from a bitstream (equivalent to a compressed bitstream). An example of the decoded base mesh frame (equivalent to a decoded base mesh frame) is illustrated as decoded base mesh frame 2301 (see FIG. 36).

In step S202, decoding device 200 performs the subdivision process on the base mesh frame decoded in step S201 to produce subdivided vertices. An example of the base mesh frame including the subdivided vertices is illustrated as base mesh frame 2302 (see FIG. 36).

In step S203, decoding device 200 decodes displacement information from the bitstream (equivalent to the compressed bitstream). An example of the decoded displacement information is illustrated as displacement information 2303 (see FIG. 36). Displacement information 2303 is in a vector format. In other words, displacement information 2303 is represented as displacement vectors.

In step S204, using the displacement information, decoding device 200 moves the vertices of the base mesh frame including the subdivided vertices to new positions to reconstruct the shape of the mesh frame and further applies attribute information to restore the mesh frame. An example of the attributes is texture. An example of the reconstructed mesh frame is illustrated as mesh frame 2304 (see FIG. 36).

Hereinafter, the subdivision will be described. The subdivision is executed by a subdivider (specifically, subdivider 1206 or subdivider 2204).

FIG. 37 is an explanatory diagram illustrating an example of the subdivision.

A base mesh illustrated in (a) in FIG. 37 includes vertices A, B, and C and connection information indicating their connectivity.

In (b) in FIG. 37, a mesh produced by the first subdivision, in other words, a mesh after the first subdivision is illustrated. In the first subdivision, the subdivider generates vertices D, E, and F and connection information indicating their connectivity. This mesh produced by the subdivider will also be referred to as LoD1 or a first LoD.

Vertex D in the mesh after the first subdivision is a vertex that is generated by subdivision based on vertex A and vertex B. Likewise, vertex E is a vertex that is generated by subdivision based on vertex B and vertex C. Vertex F is a vertex that is generated by subdivision based on vertex A and vertex C.

Note that, as an example, vertex D can be the midpoint of segment AB (in other words, edge AB) connecting vertices A and B, which are used to generate vertex D. Likewise, vertex E can be the midpoint of segment AC. Vertex F can be the midpoint of segment BC.

In (c) in FIG. 37, a mesh produced by the second subdivision, in other words, a mesh after the second subdivision is illustrated. In the second subdivision, the subdivider generates vertices G, H, I, J, K, L, M, N, and O and connection information indicating their connectivity. This mesh produced by the subdivider will also be referred to as LoD2 or a second LoD.

Vertex G in the mesh after the second subdivision is a vertex that is generated by subdivision based on vertex A and vertex D. Likewise, vertex H is a vertex that is generated by subdivision based on vertex A and vertex E. Vertex I is a vertex that is generated by subdivision based on vertex B and vertex D. Vertex J is a vertex that is generated by subdivision based on vertex D and vertex F. Vertex K is a vertex that is generated by subdivision based on vertex E and vertex F. Vertex L is a vertex that is generated by subdivision based on vertex C and vertex E. Vertex M is a vertex that is generated by subdivision based on vertex B and vertex F. Vertex N is a vertex that is generated by subdivision based on vertex C and vertex F. Vertex O is a vertex that is generated by subdivision based on vertex D and vertex E.

Note that, as an example, vertex G can be the midpoint of segment AD (in other words, edge AD) connecting vertices A and D, which are used to generate vertex G. Likewise, vertex H can be the midpoint of segment AE. Vertex I can be the midpoint of segment BD. Vertex J can be the midpoint of segment DF. Vertex K can be the midpoint of segment EF. Vertex L can be the midpoint of segment CE. Vertex M can be the midpoint of segment BF. Vertex N can be the midpoint of segment CF. Vertex O can be the midpoint of segment DE.

Hereinafter, the displacement of vertices will be described with reference to FIG. 38 and FIG. 39. The displacement of vertices is executed by reconstructor 2209.

FIG. 38 is an explanatory diagram illustrating an example of the displacement of vertices in which the vertices are subdivided and then displaced. FIG. 39 is an explanatory diagram illustrating an example of the vertices of the original mesh.

A base mesh illustrated in (a) in FIG. 38 includes vertices A, B, C, and Z and connection information indicating their connectivity.

In (b) in FIG. 38, a mesh produced by the first subdivision, in other words, a mesh after the first subdivision (i.e., a first LoD) is illustrated. In the first subdivision, the subdivider generates vertex S, T, U, X, or Y and connection information indicating their connectivity. Vertex S, T, U, X, or Y is similar to vertices D, E, and F illustrated in (b) in FIG. 37.

In (c) in FIG. 38, a mesh produced by the second subdivision, in other words, a mesh after the second subdivision (i.e., a second LoD) is illustrated. In the second subdivision, the subdivider generates vertices D, E, F, G, and H and connection information indicating their connectivity. Vertices D, E, F, G, and H are similar to vertices G, H, I, J, K, L, M, N, or O illustrated in (c) in FIG. 37.

In (d) in FIG. 38, a mesh including vertices that are subdivided and then displaced is illustrated. Vertices A, B, C, D, E, F, G, H, S, T, U, X, Y, and Z illustrated in (d) in FIG. 38 are at positions that are displaced from positions of the respective vertices illustrated in (c) in FIG. 38 using the displacement information.

The original mesh illustrated in FIG. 39 is an example of the mesh input into encoding device 100, that is, a mesh before encoding.

The mesh illustrated in FIG. 38 has a shape similar to that of the original mesh illustrated in FIG. 39. Since the displacement information is generated by displacement vector calculator 1207 of encoding device 100 as information indicating the displacement from the vertices of the base mesh to the vertices of the original mesh, the mesh having the shape similar to that of the original mesh is generated by the reconstruction of the mesh using the displacement information that has been generated in such a manner.

Decoding device 200 is capable of outputting the mesh illustrated in (d) in FIG. 38.

Next, the division of a mesh into submeshes will be described with reference to FIG. 40 and FIG. 41.

The mesh can be divided into a plurality of portions each of which is smaller than the mesh and can be encoded. When the mesh is divided, the vertices of the mesh can be divided such that sets of coordinates and connectivity of the vertices included in each portion are independently encodable.

FIG. 40 is an explanatory diagram illustrating an example of a mesh. FIG. 41 is an explanatory diagram illustrating an example of the division of a mesh into submeshes.

The mesh illustrated in FIG. 40 is an original mesh and may also be referred to as a full mesh, in contrast to a submesh.

FIG. 41 illustrates how the full mesh illustrated in FIG. 40 is divided into two submeshes. For vertices A, B, and C of the full mesh (see FIG. 40), vertex A is duplicated into vertex A1 and vertex A2, vertex B is duplicated into vertex B1 and vertex B2, and vertex C is duplicated into vertex C1 and vertex C2. Thus, the two submeshes (i.e., a first submesh and a second submesh) are created from the full mesh. The first submesh and the second submesh are meshes that are independently decodable.

Hereinafter, the packing of displacement information into an image frame will be described with reference to FIG. 42, FIG. 43, and FIG. 44.

FIG. 42, FIG. 43, and FIG. 44 are explanatory diagrams illustrating examples of packing the displacement information into an image frame. Note that the image frame can be rephrased as a video frame.

Items of displacement data on vertices are mapped into, for example, components of an image frame in a YUV format (i.e., into Y components (Y Plane), U components (U Plane), and V components (V Plane)), thus being encoded as image frame data. This case will be described below as an example. Note that, as another example, the items of displacement data on vertices may be mapped into components of an image frame in an RGB format (R components, G components, and B components), thus being encoded as the image frame data.

Decoding device 200 can use an image encoding module to extract the items of displacement data. Each of the items of displacement data may be in the form of an X component, a Y component, or a Z component in a global coordinate system (e.g., a Cartesian coordinate system) or a normal, a tangent, or a bi-tangent component in a local coordinate system. Methods of mapping the displacement data into the image frame include the following methods.

For example, in a first method, the items of displacement data are arranged in a traversing order in the image frame. An example of the packing of the items of displacement data in this case is illustrated in FIG. 42. The items of displacement data are directly mapped onto the image frame according to a predefined traversing order.

Note that the image frame has a fixed height and width, and thus there are cases where the items of displacement data do not fit exactly in the frame. In such a case, the remaining part of the image frame is padded with data for padding (also referred to as Padded data) (see FIG. 42).

For example, in a second method, the items of displacement data are separated into a plurality of LoDs and mapped into the Y components, U components, and V components of the image frame. An example of the packing of the items of displacement data in this case is illustrated in FIG. 43. Here, the items of displacement data in the image frame for the next LoD start immediately after the items of displacement data for the previous LoD end. As in the first method, in the case where the items of displacement data do not exactly fit in the image frame, the image frame is padded at its end portion (see FIG. 43).

For example, in a third method, the items of displacement data corresponding to the LoDs are mapped onto the Y components, U components, and V components of the image frame in a manner different from the second method. An example of the packing of the items of displacement data in this case is illustrated in FIG. 44. In this manner, each LoD can be independently decoded. In the third method, interim padding is performed for each LoD's displacement data to provide CTU alignment together with the padding at the end of the video frame (see FIG. 44).

Hereinafter, details of a process by encoding device 100 will be described.

FIG. 45 is a flowchart illustrating an example of a detailed process by encoding device 100. The process illustrated in FIG. 45 is a detailed process included in the process illustrated in FIG. 31.

In step S301, encoding device 100 encodes first vertices and first displacement vectors into a bitstream. Here, the first vertices are vertices included in a base mesh. The first displacement vectors are vectors indicating displacements from the vertices included in the base mesh (i.e., the first vertices) to vertices that are included in a mesh input into encoding device 100 and correspond to the vertices included in the base mesh (i.e., second vertices).

In step S302, encoding device 100 decodes (in other words, reconstructs) the first vertices and the first displacement vectors from the bitstream encoded in step S301 and reconstructs the second vertices using the decoded first vertices and first displacement vectors. The reconstruction of the second vertices includes the reconstruction of the first displacement vectors.

Specifically, encoding device 100 decodes the bitstream encoded in step S301 to acquire the first vertices and the first displacement vectors. Encoding device 100 then displaces the decoded first vertices using the decoded first displacement vectors to reconstruct the second vertices.

Note that encoding device 100 can acquire the first vertices and the first displacement vectors by calculating the first vertices and the first displacement vectors from the values of parameters used when the first vertices or the first displacement vectors are encoded, rather than acquiring the first vertices and the first displacement vectors by decoding the bitstream into which the first vertices and the first displacement vectors are encoded. Here, the parameters used when the first vertices or the first displacement vectors are encoded include, for example, quantization parameters.

In step S303, encoding device 100 calculates third vertices through an interpolation process based on the positions of a plurality of vertices including at least the second vertices reconstructed in step S302.

In step S304, encoding device 100 calculates vectors (equivalent to second displacement vectors) that indicate the displacements from the third vertices calculated in step S303 to fourth vertices.

In step S305, encoding device 100 encodes the second displacement vectors calculated in step S304 into the bitstream.

In this manner, encoding device 100 encodes the second displacement vectors indicating the displacements to the fourth vertices from reference points, which are the third vertices indicated by the resultant vectors of a plurality of reconstructed first displacement vectors. Encoding device 100 can thus reduce the amount of information in the second displacement vectors in some cases. For example, as compared with the case of using, as the reference points, vertices calculated from a plurality of first vertices included in the base mesh to encode the displacement vectors indicating the displacements to the fourth vertices, the encoding by encoding device 100 can decrease the distances from the reference points to the fourth vertices in some cases. The encoding can thus reduce the amount of information in the second displacement vectors in some cases. As a result, encoding device 100 can contribute to a reduction in the amount of encoded information, thus enhancing the efficiency of the encoding or decoding process in some cases. As seen from the above, encoding device 100 is capable of improving an encoding or decoding process related to three-dimensional data.

Note that the process by encoding device 100 can also be described as follows.

In other words, encoding device 100 encodes, for each of vertices included in a three-dimensional mesh (e.g., P, Q, and R in FIG. 53), displacement data to be used to derive a displacement vector (e.g., AP, BQ, and YR in FIG. 53). Here, the displacement vector indicates a displacement from a first position (e.g., A, B, and Y in FIG. 53) of a vertex generated using a base mesh. The vertices include a first vertex (e.g., R in FIG. 53), a second vertex (e.g., P in FIG. 53), and a third vertex (e.g., Q in FIG. 53), and the displacement data of the first vertex indicates a difference between the displacement vector of the first vertex and a combined vector of the displacement vector of the second vertex and the displacement vector of the third vertex. Thus, encoding device 100 can reduce the amount of information in the displacement data on the first vertex in some cases because the displacement data on the first vertex indicates the difference between the displacement vector of the first vertex and the resultant vector of the displacement vector of the second vertex and the displacement vector of the third vertex. As a result, encoding device 100 can contribute to a reduction in the amount of encoded information, thus enhancing the efficiency of the encoding or decoding process in some cases. As seen from the above, encoding device 100 is capable of improving an encoding or decoding process related to three-dimensional data.

Hereinafter, details of a process by decoding device 200 will be described.

FIG. 46 is a flowchart illustrating a detailed process by decoding device 200. The process illustrated in FIG. 46 is a detailed process included in step S204 in FIG. 35.

In step S401, decoding device 200 decodes first vertices and first displacement vectors from a bitstream. Here, the first vertices are vertices included in a base mesh. The first displacement vectors are vectors indicating displacements from the vertices included in the base mesh (i.e., the first vertices) to vertices that are included in a mesh input into encoding device 100 and correspond to the vertices included in the base mesh (i.e., second vertices).

In step S402, decoding device 200 reconstructs the second vertices using the first vertices and first displacement vectors decoded in step S401. Specifically, decoding device 200 displaces the first vertices acquired by the decoding in step S401 using the first displacement vectors acquired by the decoding in step S401 to reconstruct the second vertices.

In step S403, decoding device 200 calculates third vertices through the interpolation process based on the positions of a plurality of vertices including at least the second vertices reconstructed in step S402.

In step S404, decoding device 200 decodes second displacement vectors from the bitstream. Here, the second displacement vectors are vectors indicating the displacements from the third vertices to the fourth vertices.

In step S405, decoding device 200 displaces the third vertices calculated in step S403 using the second displacement vectors decoded in step S404 to reconstruct the fourth vertices.

In step S406, decoding device 200 reconstructs a mesh using at least the second vertices reconstructed in step S402 and the fourth vertices reconstructed in step S405.

In this manner, decoding device 200 decodes the second displacement vectors indicating the displacements to the fourth vertices from reference points, which are the third vertices indicated by the resultant vectors of a plurality of decoded first displacement vectors. Decoding device 200 can thus reduce the amount of information in the second displacement vectors in some cases. For example, as compared with the case of using, as the reference points, vertices calculated from a plurality of first vertices included in the base mesh to decode the displacement vectors indicating the displacements to the fourth vertices, the decoding by decoding device 200 can decrease the distances from the reference points to the fourth vertices in some cases. The decoding can thus reduce the amount of information in the second displacement vectors in some cases. As a result, decoding device 200 can contribute to a reduction in the amount of encoded information, thus enhancing the efficiency of the encoding or decoding process in some cases. As seen from the above, decoding device 200 is capable of improving an encoding or decoding process related to three-dimensional data.

Note that the process by decoding device 200 can also be described as follows.

In other words, decoding device 200 decodes, for each of vertices (P, Q, R) included in a three-dimensional mesh, displacement data to be used to derive a displacement vector (AP, BQ, YR). Here, the displacement vector indicates a displacement from a first position (A, B, Y) of a vertex generated using a base mesh. The vertices include a first vertex (R), a second vertex (P), and a third vertex (Q).

Decoding device 200 generates the displacement vector of the first vertex using the displacement data of the first vertex and a combined vector of the displacement vector of the second vertex and the displacement vector of the third vertex.

In this manner, decoding device 200 adds the displacement vector of the second vertex and the displacement vector of the third vertex with equal weights. Decoding device 200 can thus generate the resultant vector through an easier computing process, contributing to a reduction in a processing load or a power consumption. As a result, decoding device 200 is capable of improving an encoding or decoding process related to three-dimensional data.

Hereinafter, the above processes will be described in detail.

FIG. 47 is an explanatory diagram illustrating a process of reconstructing second vertices. The process of reconstructing the second vertices illustrated in FIG. 47 is a process executed by encoding device 100 in step S302 (see FIG. 45) or a process executed by decoding device 200 in step S402 (see FIG. 46).

FIG. 47 illustrates mesh 6001 and mesh 6002 that is produced based on mesh 6001.

Mesh 6001 is an example of the base mesh and includes vertices A, B, C, and D. Vertices A, B, C, and D correspond to first vertices.

Mesh 6002 is an example of the original mesh and includes vertices A1, B1, C1, and D1. Vertices A1, B1, C1, and D1 correspond to second vertices.

Vertices A1, B1, C1, and D1 of mesh 6002 are generated by displacing vertices A, B, C, and D of mesh 6001 using first displacement vectors, respectively.

That is, vertex A1 of mesh 6002 is reconstructed by displacing vertex A of mesh 6001 using a displacement vector {x1, y1, z1}.

Likewise, vertex B1 of mesh 6002 is reconstructed by displacing vertex B of mesh 6001 using a displacement vector {x2, y2, z2}.

Vertex C1 of mesh 6002 is reconstructed by displacing vertex C of mesh 6001 using a displacement vector {x3, y3, z3}.

Vertex D1 of mesh 6002 is reconstructed by displacing vertex D of mesh 6001 using a displacement vector {x4, y4, z4}.

FIG. 48 is an explanatory diagram illustrating a first example of a process of calculating third vertices.

The process of calculating the third vertices illustrated in FIG. 48 is the process executed in step S303 (see FIG. 45) or step S403 (see FIG. 46).

FIG. 48 illustrates vertices S, T, X, Y, and Z in a mesh including vertices A1, B1, C1, and D1. Vertices A1, B1, C1, and D1 correspond to second vertices, and vertices S, T, X, Y, and Z correspond to the third vertices. The positions of the third vertices are calculated through the interpolation process based on the position of a plurality of vertices including at least the second vertices.

In FIG. 48, vertex X is calculated through the interpolation process based on at least vertex A1. Vertex Y is calculated through the interpolation process based on at least vertex B1. Vertex Z is calculated through the interpolation process based on at least vertex C1. Vertex S is calculated through the interpolation process based on at least vertex C1. Vertex T is calculated through the interpolation process based on at least vertex D1.

The interpolation process of calculating the third vertices includes, for example, the subdivision process based on vertices that are displaced from the vertices included in the base mesh. Note that the interpolation process of calculating the third vertices may include the subdivision process based on vertices that are displaced from vertices included in a mesh produced through the subdivision process.

Note that although the above describes the example in which the third vertices are calculated through the interpolation process based on at least the second vertices, the third vertices may be calculated through the interpolation process based on at least first vertices.

In this case, whether the third vertices are calculated through the interpolation process based on the second vertices or the interpolation process based on the first vertices may be determined based on a parameter.

Note that the positions of the first vertices and the positions of the third vertices generated based on the first vertices in the above description may be referred to as vertex positions generated using the base mesh. Although the above has described, by way of example, the case where the interpolation process is used when the positions of the third vertices are derived using the positions of the first vertices, a process other than the interpolation process may be used to derive the positions of the third vertices, or the positions of the third vertices may be derived using another parameter in addition to the positions of the first vertices. Here, as the process other than the interpolation process, another interpolation process such as Lagrange interpolation or spline interpolation may be used.

Although the above has described, by way of example, the case where the positions of the third vertices are each calculated from the positions of two of the first vertices, which are the vertices included in the base mesh, the vertices used in the interpolation process or the other interpolation process need not be the vertices included in the base mesh. For example, the position of another third vertex may be derived through the interpolation process or the other interpolation process using the position of a first vertex, which is a vertex included in the base mesh, and the position of a third vertex generated through the interpolation process or the other interpolation process using first vertices. Likewise, the position of another third vertex may be derived through the interpolation process or the other interpolation process using the positions of two of third vertices generated through the interpolation process or the other interpolation process.

Hereinafter, the storage location of the parameter will be described.

The parameter included in a bitstream may be included in data in the bitstream or may be included in a header in the bitstream.

FIG. 49 and FIG. 50 are explanatory diagrams each illustrating an example of the storage location of the parameter.

FIG. 49 illustrates an example of a bitstream in which the parameter included in the bitstream is included in data in the bitstream.

FIG. 50 illustrates an example of a bitstream in which the parameter included in the bitstream is included in a header in the bitstream.

FIG. 51 is an explanatory diagram illustrating a second example of a process of calculating third vertices.

FIG. 51 illustrates vertices S, T, X, Y, and Z in a base mesh including vertices A, B, C, and D. Vertices A, B, C, and D correspond to first vertices, and vertices S, T, X, Y, and Z correspond to the third vertices. The positions of the third vertices are calculated through the interpolation process based on the position of a plurality of vertices including at least the first vertices.

In FIG. 51, vertex X is calculated through the interpolation process based on at least vertex A. Vertex Y is calculated through the interpolation process based on at least vertex B. Vertex Z is calculated through the interpolation process based on at least vertex C. Vertex S is calculated through the interpolation process based on at least vertex C. Vertex T is calculated through the interpolation process based on at least vertex D.

Hereinafter, the interpolation process will be described in detail.

FIG. 52 is an explanatory diagram illustrating a first example of the interpolation process. With reference to FIG. 52, a first example of the method of calculating vertex R based on at least the interpolation process will be described.

FIG. 52 illustrates vertices A and B included in a base mesh (corresponding to first vertices) and vertices P and Q displaced from vertices A and B, respectively (corresponding to second vertices).

Vertex P is a vertex that is displaced from vertex A using a first displacement vector {x1, y1, z1}. Vertex Q is a vertex that is displaced from vertex B using a first displacement vector {x2, y2, z2}. Note that the relation between a vertex included in the base mesh and a vertex displaced from the vertex using a displacement vector, such as between vertex A and vertex P and between vertex B and vertex Q, may be expressed as the phrase "correspondence relation."

FIG. 52 also illustrates vertex X (corresponding to a third vertex). Vertex X is a vertex that is generated through the subdivision process based on vertices P and Q. More specifically, vertex X is a point generated at the center (i.e., the midpoint) of segment PQ connecting vertices P and Q (in other words, edge PQ).

FIG. 52 also illustrates vertex R (corresponding to a fourth vertex). Vertex R is a vertex that is displaced from vertex X using a second displacement vector {x3, y3, z3}.

Note that the first displacement vectors {x1, y1, z1} and {x2, y2, z2}, and the second displacement vector {x3, y3, z3} are encoded into a bitstream.

FIG. 53 is an explanatory diagram illustrating a second example of the interpolation process. With reference to FIG. 53, a second example of the method of calculating vertex R based on at least the interpolation process will be described.

FIG. 53 illustrates vertices A, B, P, Q, X, and R as in FIG. 52.

FIG. 53 further illustrates vertex Y.

Vertex Y (corresponding to a fifth vertex) is a vertex that is generated through the subdivision process based on vertices A and B. More specifically, vertex Y is a point generated at the center (i.e., the midpoint) of segment AB connecting vertices A and B (in other words, edge AB).

Vertex R is reconstructed by displacing vertex Y using a third displacement vector {x4, y4, z4}. The third displacement vector {x4, y4, z4} is determined using a prediction vector YX {px, py, pz}.

Here, the prediction vector YX {px, py, pz} is calculated using the vector {x1, y1, z1} and the vector {x2, y2, z2}. For example, the prediction vector YX {px, py, pz} is calculated by averaging the vector {x1, y1, z1} and the vector {x2, y2, z2}. Alternatively, the prediction vector YX {px, py, pz} may be obtained by selecting one of the vector {x1, y1, z1} and the vector {x2, y2, z2}.

Residual vector XR {rx, ry, rz} is calculated by subtracting the prediction vector YX {px, py, pz} from the vector {x4, y4, z4}.

Note that the first displacement vectors {x1, y1, z1} and {x2, y2, z2}, and the residual vector {rx, ry, rz} are encoded into a bitstream.

Hereinafter, the decoding of second displacement vectors will be described.

In step S404 (see FIG. 46), the second displacement vectors are decoded from the bitstream. Note that, in the case where the process described with reference to FIG. 53 is used, residual vectors are decoded from the bitstream in step S404.

For example, first displacement vectors and either the second displacement vectors or the residual vectors are decoded from the bitstream. The first displacement vectors and either the second displacement vectors or the residual vectors may be encoded as data in an image format or may be encoded as data in a format other than the image format. In the case where the first displacement vectors and either the second displacement vectors or the residual vectors are encoded in the image format, the first displacement vectors and either the second displacement vectors or the residual vectors are acquired from data in the image format decoded by an image decoding device that supports an image codec system used in the encoding. In the case where the first displacement vectors and either the second displacement vectors or the residual vectors are encoded in the format other than the image format, the first displacement vectors and either the second displacement vectors or the residual vectors are acquired by the decoding device decoding the bitstream or a subbitstream included in the bitstream.

Here, the first displacement vectors and either the second displacement vectors or the residual vectors each include, for example, at least one component. The component included in the first displacement vectors and either the second displacement vectors or the residual vectors is represented using a global coordinate system such as a Cartesian coordinate system. Note that the first displacement vectors and either the second displacement vectors or the residual vectors may be represented using, for example, a local coordinate system that is provided in point, edge, face, or a predetermined data unit, such as normal, tangent, and bi-tangent. Alternatively, the first displacement vectors and either the second displacement vectors or the residual vectors may each have three components, may be generated to have only one or two components, or may be generated to have three components and then converted to have only one or two components.

Note that the data in the image format generated in such a manner as to arrange the first displacement vectors and either the second displacement vectors or the residual vectors may have, for example, Y, U, and V components or R, G, and B components. The data in the image format generated in such a manner as to arrange the first displacement vectors and either the second displacement vectors or the residual vectors may be encoded in, for example, a YUV420 chroma format or may be encoded in YUV444 chroma format or YUV400 chroma format.

Note that although the first vertices and the second vertices in the above description are, for example, vertices included in a base mesh of a mesh to be encoded, either the first vertices or the second vertices or both the first vertices and the second vertices may be vertices not included in the base mesh. For example, the positions of either the first vertices and the second vertices or both the first vertices and the second vertices may be positions generated from the positions of the vertices included in the base mesh of the mesh to be encoded through a process such as interpolation, interpolation, or extrapolation, or may be positions generated based on the positions of the vertices included in a base mesh of another mesh. The first displacement vector and the second displacement vector may be mapped onto, for example, two tiles included in the data in the image format. The first displacement vector and the second displacement vector may be mapped onto, for example, two slices included in the data in the image format. The first displacement vector and the second displacement vector may be mapped onto, for example, two regions included in the data in the image format. The first displacement vector and the residual vector may be mapped onto, for example, two tiles included in the data in the image format. The first displacement vector and the residual vector may be mapped onto, for example, two slices included in the data in the image format. The first displacement vector and the residual vector may be mapped onto, for example, two regions included in the data in the image format.

Hereinafter, the reconstruction of fourth vertices will be described.

In step S405 (see FIG. 46), the third vertices are displaced using the second displacement vectors to reconstruct the fourth vertices.

FIG. 54 is an explanatory diagram illustrating a process of reconstructing the fourth vertices.

FIG. 54 illustrates mesh 6101 and mesh 6102 that is produced based on mesh 6101.

Mesh 6101 includes vertices A1, B1, C1, and D1 and vertices S, T, X, Y, and Z. Vertices A1, B1, C1, and D1 correspond to second vertices. Vertices S, T, X, Y, and Z correspond to the third vertices.

Mesh 6102 includes vertices A1, B1, C1, and D1 and vertices S1, T1, X1, Y1, and Z1. Vertices A1, B1, C1, and D1 are the same as vertices A1, B1, C1, and D1 in mesh 6101. Vertices S1, T1, X1, Y1, and Z1 correspond to the fourth vertices.

The fourth vertices in mesh 6102 are reconstructed by displacing the third vertices in mesh 6101 using the second displacement vectors.

That is, vertex X1 of mesh 6102 is reconstructed by displacing vertex X of mesh 6101 using a displacement vector {x5, y5, z5}.

Likewise, vertex Y1 of mesh 6102 is reconstructed by displacing vertex Y of mesh 6101 using a displacement vector {x6, y6, z6}.

Vertex Z1 of mesh 6102 is reconstructed by displacing vertex Z of mesh 6101 using a displacement vector {x7, y7, z7}.

Vertex S1 of mesh 6102 is reconstructed by displacing vertex S of mesh 6101 using a displacement vector {x8, y8, z8}.

Vertex T1 of mesh 6102 is reconstructed by displacing vertex T of mesh 6101 using a displacement vector {x9, y9, z9}.

Hereinafter, the reconstruction of a mesh will be described.

In step S406 (see FIG. 46), the mesh is reconstructed using at least the second vertices and the fourth vertices. As an example, a process of reconstructing the mesh including a process of applying texture to faces formed with vertices.

FIG. 55 is an explanatory diagram illustrating an example of a reconstructed mesh.

The reconstructed mesh illustrated in FIG. 55 includes vertices A1, B1, C1, and D1 and vertices S1, T1, X1, Y1, and Z1. In the reconstructed mesh illustrated in FIG. 55, texture is applied to its faces formed with the vertices.

Hereinafter, another example of the interpolation process will be described in detail.

In the above first example of the interpolation process (see FIG. 52), the case where vertex X (corresponding to a third vertex) is the midpoint of segment PQ is described as an example. In the example, encoding device 100 adds the plurality of reconstructed first displacement vectors with the equal weights to generate the resultant vector and encodes the second displacement vectors using the generated resultant vector. In this manner, encoding device 100 adds the plurality of reconstructed first displacement vectors with equal weights. Encoding device 100 can thus generate the resultant vector through an easier computing process, contributing to a reduction in a processing load or a power consumption. As a result, encoding device 100 is capable of improving an encoding or decoding process related to three-dimensional data.

In the above case, decoding device 200 adds the plurality of reconstructed first displacement vectors with the equal weights to generate the resultant vector and encodes the second displacement vectors using the generated resultant vector. In this manner, decoding device 200 adds the plurality of reconstructed first displacement vectors with equal weights. Decoding device 200 can thus generate the resultant vector through an easier computing process, contributing to a reduction in a processing load or a power consumption. As a result, decoding device 200 is capable of improving an encoding or decoding process related to three-dimensional data.

However, vertex X is not limited to the midpoint of segment PQ. That is, the ratio PX:QX between segment PX and segment QX is not limited to 1:1 and may be another ratio. In other words, encoding device 100 may add the plurality of reconstructed first displacement vectors with different weights to generate the resultant vector and may encode the second displacement vectors using the generated resultant vector. In this manner, encoding device 100 can generate the resultant vector more appropriately in some cases by adding the plurality of reconstructed first displacement vectors with the different weights. For example, the weights for the plurality of first displacement vectors can be appropriately set according to parameters of the encoding process. In this case, the resultant vector may be appropriately generated according to the parameters of the encoding process. This can contribute to an improvement in the encoding or decoding process. As a result, encoding device 100 is capable of improving an encoding or decoding process related to three-dimensional data.

In the above case, decoding device 200 may add the plurality of reconstructed first displacement vectors with different weights to generate the resultant vector and may encode the second displacement vectors using the generated resultant vector. In this manner, decoding device 200 can generate the resultant vector more appropriately in some cases by adding the plurality of reconstructed first displacement vectors with the different weights. For example, the weights for the plurality of first displacement vectors can be appropriately set according to parameters of the encoding process. In this case, the resultant vector may be appropriately generated according to the parameters of the encoding process. This can contribute to an improvement in the encoding or decoding process. As a result, decoding device 200 is capable of improving an encoding or decoding process related to three-dimensional data.

FIG. 56 is an explanatory diagram illustrating a third example of the interpolation process.

The ratio PX:QX between segment PX and segment QX may be changed in accordance with the position of vertex Y that is inserted in the subdivision of a mesh. For example, in the case where segment AB is trisected in the subdivision process, PX:QX may be set to be 1:2 or 2:1 in accordance with the position of vertex Y on segment AB. In this case, prediction vector YX for vector YR is determined according to (Equation 1) and (Equation 2) shown below.

- When PX:QX = 1:2,
    [Math. 1]

$$\overrightarrow{YX} = \frac{2 \times \overrightarrow{AP} + \overrightarrow{BQ}}{3} \qquad \text{(Equation 1)}$$

- When PX:QX = 2:1,
    [Math. 2]

$$\overrightarrow{YX} = \frac{\overrightarrow{AP} + 2 \times \overrightarrow{BQ}}{3} \qquad \text{(Equation 2)}$$

In this manner, encoding device 100 can obtain, from two second vertices, vertex Y (i.e., a third vertex) positioned on the segment connecting the two second vertices using two first displacement vectors. In this manner, encoding device 100 can reduce the amount of information in the second displacement vector more easily in some cases by using the third vertex that is set on the segment connecting the two second vertices, as a reference point. As a result, encoding device 100 is capable of improving an encoding or decoding process related to three-dimensional data.

In the above case, for two second vertices, decoding device 200 can obtain, from two second vertices, vertex Y (i.e., the third vertex) positioned on the segment connecting the two second vertices using two first displacement vectors. In this manner, decoding device 200 can reduce the amount of information in the second displacement vector more easily in some cases by using the third vertex that is set on the segment connecting the two second vertices, as a reference point. As a result, decoding device 200 is capable of improving an encoding or decoding process related to three-dimensional data.

FIG. 57 is an explanatory diagram illustrating a fourth example of the interpolation process.

The position of vertex Y generated between segment AB can be determined using not only vertices A and B but also a plurality of vertices that are linked in the neighborhood of vertex Y.

For example, in the case where the position of vertex Y is determined also using the plurality of vertices linked in the neighborhood, weighted averages of a set of coordinates of eight vertices A, B, C, D, E, F, G, and H that are linked in the neighborhood of vertex Y can be determined as the coordinates of vertex Y.

In this case, prediction vector YX of vector YR may be determined according to (Equation 3) shown below, where AY:BY is regarded as PX:QX. Here, assume AY:BY = wa:wb. wa or wb is a weighting coefficient indicating a weight used for the calculation of prediction vector YX and may be any numerical value, greater than zero or less than zero.
[Math. 3]

$$\overrightarrow{YX} = \frac{wb \times \overrightarrow{AP} + wa \times \overrightarrow{BQ}}{wa + wb} \qquad \text{(Equation 3)}$$

Note that although the division by 3 or (wa + wb) is performed for the weighted averaging in the above equations, scaling parameter k may be multiplied as in (Equation 4) shown below instead of the division by 3 or (wa + wb).
[Math. 4]

$$\overrightarrow{YX} = k \times \left( wb \times \overrightarrow{AP} + wa \times \overrightarrow{BQ} \right) \qquad \text{(Equation 4)}$$

Scaling parameter k may be notified from encoding device 100 to decoding device 200 as an adjustment parameter on a persequence, per-frame, or per-submesh basis.

Here, the value of scaling parameter k may be 1/(wa + wb) or may be a value different from (wa + wb). In the case where the value of scaling parameter k is 1/(wa + wb), the total of the weights is 1, and point X is positioned on the line passing through point P and point Q. In the case where the value of scaling parameter k is a value different from 1/(wa + wb), the total of the weights is not 1, and point X is not positioned on the line passing through point P and point Q.

Note that although the above description includes the determination of the ratio between PX and QX, the method of calculating prediction vector YX using vector AP and vector BQ is not limited to this. For example, encoding device 100 or decoding device 200 may calculate weighting coefficient wb by which vector AP is to be multiplied and weighting coefficient wa by which vector BQ is to be multiplied based on the ratio between AY (the distance between vertex A and vertex Y) and BY (the distance between vertex B and vertex Y).

Encoding device 100 or decoding device 200 may use a parameter different from a distance between vertices (e.g., the magnitudes of displacement vectors AP and BQ or any parameter of another decoded frame, etc.) to calculate weighting coefficients wb and wa.

As seen from the above, the encoding and decoding methods described in the present disclosure may calculate weighting coefficients wb and wa using information including the positions of or connectivity relation among encoded or decoded vertices or using a displacement vector. This may make it possible to enhance the accuracy of estimating prediction vector YX and enhance encoding efficiency.

Note that the third vertex may be positioned at a position not on the segment connecting any two second vertices selected from among a plurality of second vertices. For example, in the case of performing a subdivision using a plurality of vertices A to H linked in the neighborhood of vertex Y, vertex Y need not be positioned on the segment connecting any two of the plurality of vertices A to H, as with vertex Y illustrated in FIG. 57. In other words, vertex Y may be positioned not on the segment connecting any two of the plurality of vertices A to H.

In this manner, encoding device 100 or decoding device 200 can further reduce the amount of information in the second displacement vector in some cases by using the third vertex that is set at a position not on the segment connecting any two second vertices of the plurality of second vertices, as a reference point. As a result, encoding device 100 or decoding device 200 is capable of improving an encoding or decoding process related to three-dimensional data.

<Other examples>

Although the aspects of encoding device 100 and decoding device 200 have thus far been described according to the embodiment, the aspects of encoding device 100 and decoding device 200 are not limited to the embodiment. Modifications that may be conceived by a person skilled in the art may be applied to the embodiment, and a plurality of constituent elements in the embodiment may be combined in any manner.

For example, processing performed by a specific constituent element in the embodiment may be performed by a different constituent element instead of the specific constituent element. Moreover, the order of processes may be changed or processes may be performed in parallel.

Moreover, as stated above, it is possible to implement, as an integrated circuit, at least part of the plurality of constituent elements in the present disclosure. At least part of the processes in the present disclosure may be used as an encoding method or a decoding method. A program for causing a computer to execute the encoding method or the decoding method may be used. Furthermore, a non-transitory computer-readable recording medium on which the program is recorded may be used. In addition, a bitstream for causing decoding device 200 to perform decoding may be used.

Moreover, at least part of the plurality of constituent elements and the processes in the present disclosure may be used as a transmitting device, a receiving device, a transmitting method, and a receiving method. A program for causing a computer to execute the transmitting method or the receiving method may be used. Furthermore, a non-transitory computer-readable recording medium on which the program is recorded may be used.

[Industrial Applicability]

The present disclosure is useful in, for example, an encoding device, a decoding device, a transmitting device, a receiving device, and the like related to a three-dimensional mesh and can be applied to a computer graphics system, a three-dimensional data display system, and the like.

[Reference Signs List]

100 encoding device
101, 121, 144 vertex information encoder
102, 145 connection information encoder
103, 122 attribute information encoder
104, 204, 1103 preprocessor
105, 205, 2106 postprocessor
110 three-dimensional data encoding system
111, 211 controller
112, 212 input/output processor
113 three-dimensional data encoder
114 system multiplexer
115 three-dimensional data generator
123 metadata encoder
124 multiplexer
131 vertex image generator
132 attribute image generator
133 metadata generator
134 video encoder
141 two-dimensional data encoder
142 mesh data encoder
143 texture encoder
148 description encoder
151, 251 circuit
152, 252 memory
200 decoding device
201, 221, 244 vertex information decoder
202, 245 connection information decoder
203, 222 attribute information decoder
210 three-dimensional data decoding system
213 three-dimensional data decoder
214 system demultiplexer
215, 247 presenter
216 user interface
223 metadata decoder
224 demultiplexer
231 vertex information generator
232 attribute information generator
234 video decoder
241 two-dimensional data decoder
242 mesh data decoder
243 texture decoder
246 mesh reconstructor
248 description decoder

300 network
310 external connector
1101 input mesh
1102, 2108 attribute map
1104, 2103 base mesh
1105, 2104 displacement data
1106 compressor
1107, 1304, 2101 bitstream
1108, 2105 metadata
1201 decimator
1202, 1209 quantizer
1203 base mesh encoder
1204, 2202 base mesh decoder
1205, 2203, 2207 inverse quantizer
1206, 2204 subdivider
1207 displacement vector calculator
1208 wavelet transformer
1210 image packer
1211, 1213 video encoder
1212, 2211 color converter
1214 multiplexer
1221, 1222, 2221, 2222 switcher
1223 arithmetic encoder
1301, 2304 mesh frame
1302, 2301, 2302 base mesh frame
1303, 2303 displacement information
2102 decompressor
2107 output mesh
2201 demultiplexer
2205, 2210 video decoder
2206 image unpacker
2208 inverse wavelet transformer
2209 reconstructor
2223 arithmetic decoder
6001, 6002, 6101, 6102 mesh

**Claims**

1. An encoding device comprising:

   memory; and
   a circuit accessible to the memory, wherein
   in operation,
   the circuit encodes, for each of vertices included in a three-dimensional mesh, displacement data to be used to derive a displacement vector, the displacement vector indicating a displacement from a first position of a vertex generated using a base mesh, and
   the vertices include a first vertex, a second vertex, and a third vertex, and the displacement data of the first vertex indicates a difference between the displacement vector of the first vertex and a combined vector of the displacement vector of the second vertex and the displacement vector of the third vertex.

2. The encoding device according to claim 1, wherein
   the circuit generates the combined vector by equally weighting and combining the displacement vector of the second vertex and the displacement vector of the third vertex, and encodes the displacement data of the first vertex using the combined vector generated.

3. The encoding device according to claim 1, wherein
   the circuit generates the combined vector by differently weighting and combining the displacement vector of the second vertex and the displacement vector of the third vertex, and encodes the displacement data of the first vertex using the combined vector generated.

4. The encoding device according to claim 1, wherein
the combined vector is generated by weighting and combining displacement vectors including the displacement vector of the second vertex and the displacement vector of the third vertex, and a sum of weighting factors is 1.

5. The encoding device according to claim 1, wherein
the combined vector is generated by weighting and combining displacement vectors including the displacement vector of the second vertex and the displacement vector of the third vertex, and a sum of weighting factors is not 1.

6. A decoding device comprising:

   memory; and
   a circuit accessible to the memory, wherein
   in operation,
   the circuit decodes, for each of vertices included in a three-dimensional mesh, displacement data to be used to derive a displacement vector, the displacement vector indicating a displacement from a first position of a vertex generated using a base mesh, the vertices including a first vertex, a second vertex, and a third vertex, and
   the circuit generates the displacement vector of the first vertex using the displacement data of the first vertex and a combined vector of the displacement vector of the second vertex and the displacement vector of the third vertex.

7. The decoding device according to claim 6, wherein
the circuit generates the combined vector by equally weighting and combining the displacement vector of the second vertex and the displacement vector of the third vertex, and encodes the displacement data of the first vertex using the combined vector generated.

8. The decoding device according to claim 6, wherein
the circuit generates the combined vector by differently weighting and combining the displacement vector of the second vertex and the displacement vector of the third vertex, and encodes the displacement data of the first vertex using the combined vector generated.

9. The decoding device according to claim 6, wherein
the combined vector is generated by weighting and combining displacement vectors including the displacement vector of the second vertex and the displacement vector of the third vertex, and a sum of weighting factors is 1.

10. The decoding device according to claim 6, wherein
the combined vector is generated by weighting and combining displacement vectors including the displacement vector of the second vertex and the displacement vector of the third vertex, and a sum of weighting factors is not 1.

11. An encoding method comprising:

   encoding, for each of vertices included in a three-dimensional mesh, displacement data to be used to derive a displacement vector, the displacement vector indicating a displacement from a first position of a vertex generated using a base mesh, wherein
   the vertices include a first vertex, a second vertex, and a third vertex, and the displacement data of the first vertex indicates a difference between the displacement vector of the first vertex and a combined vector of the displacement vector of the second vertex and the displacement vector of the third vertex.

12. A decoding method comprising:

   decoding, for each of vertices included in a three-dimensional mesh, displacement data to be used to derive a displacement vector, the displacement vector indicating a displacement from a first position of a vertex generated using a base mesh, the vertices including a first vertex, a second vertex, and a third vertex; and
   generating the displacement vector of the first vertex using the displacement data of the first vertex and a combined vector of the displacement vector of the second vertex and the displacement vector of the third vertex.

FIG. 1

Three-dimensional mesh

# FIG. 2

Attribute
information

Vertex information

Connection information

Attribute
information

# FIG. 3

Three-dimensional mesh

Mapping information

Two-dimensional image

FIG. 4

Three-dimensional mesh → 100 Encoding device → Bitstream → 300 → Bitstream → 200 Decoding device → Three-dimensional mesh

FIG. 5

100

Encoding device

101

Vertex
information
encoder

Three-dimensional mesh

102

Connection
information
encoder

Bitstream

103

Attribute
information
encoder

# FIG. 6

# FIG. 7

FIG. 8

EP 4 697 270 A1

# FIG. 9

| Bitstream | | |
|---|---|---|
| Connection information | Vertex information | Attribute information |

# FIG. 10

| Bitstream | | |
|---|---|---|
| File | File | File |
| Connection information | Vertex information | Attribute information |

# FIG. 11

Bitstream

| Sub-bitstream | Sub-bitstream | Sub-bitstream |
|---|---|---|
| Connection information | Vertex information | Attribute information |

# FIG. 12

Three-dimensional data encoding system

Three-dimensional data generator ~115 →Three-dimensional data→ Three-dimensional data encoder 113 →Encoded data, control information→ System multiplexer 114 →Multiplexed data→

Controller 111

Input/output processor 112

110

Transmission signal

External connector 310

External storage device

Cloud server →Internet→

Broadcast

User terminal

210

Transmission signal

Three-dimensional data decoding system

Input/output processor

User interface 216

Multiplexed data

System demultiplexer 212 214 →Encoded data, control information→ Three-dimensional data decoder 213 →Three-dimensional data, additional information→ Presenter 215

Controller 211

EP 4 697 270 A1

## FIG. 13

## FIG. 14

|          | Position information | Attribute information |
|----------|----------------------|-----------------------|
| $n = 1$  | $G(1) = (x_1, y_1, z_1)$ | $A(1) = (R_1, G_1, B_1)$ |
| $n = 2$  | $G(2) = (x_2, y_2, z_2)$ | $A(2) = (R_2, G_2, B_2)$ |
| $\vdots$ | $\vdots$             | $\vdots$              |
| $n = N$  | $G(N) = (x_N, y_N, z_N)$ | $A(N) = (R_N, G_N, B_N)$ |

FIG. 15

FIG. 16

| | Position information | Attribute information |
|---|---|---|
| Vertex information | $n = 1$   $G(1) = (x_1, y_1, z_1)$ | $A1(1) = (R_1, G_1, B_1)$ |
| | $n = 2$   $G(2) = (x_2, y_2, z_2)$ | $A1(2) = (R_2, G_2, B_2)$ |
| | $\vdots$    $\vdots$ | $\vdots$ |
| | $n = N$   $G(N) = (x_N, y_N, z_N)$ | $A1(N) = (R_N, G_N, B_N)$ |
| Attribute information | $m = 1$   $A2(1) = (U_1, V_1)$ | |
| | $\vdots$    $\vdots$ | |
| | $m = M$   $A2(M) = (U_M, V_M)$ | |
| Connection information | $k = 1$   $n[1, 3, 4]$   $m[2, 4, 6]$ | |
| | $\vdots$   $\vdots$   $\vdots$ | |
| | $k = K$   $n[1, N\text{-}1, N]$   $m[10, 20, M]$ | |

# FIG. 17

Static object

Frame #1

Dynamic object

Frame #1    Frame #2    Frame #3

Time

FIG. 18

## FIG. 19

EP 4 697 270 A1

FIG. 20

Three-dimensional data encoder 113

Vertex information → Vertex image generator 131 → Vertex image → Video encoder 134 → Compressed vertex information / Metadata → Multiplexer 124 → Bitstream

Attribute information → Attribute image generator 132 → Attribute image → Video encoder 134 → Compressed attribute information / Metadata → Multiplexer 124

Metadata generator 133

Metadata → Metadata encoder 123 → Compressed metadata → Multiplexer 124

## FIG. 21

Three-dimensional data decoder (213)

# FIG. 22

# FIG. 23

# FIG. 24

100

Encoding device

151

Circuit

152

Memory

# FIG. 25

200

Decoding device

251

Circuit

252

Memory

# FIG. 26

Input mesh → Encoding device (100) → Stream → ⊗ (300) → Stream → Decoding device (200) → Output mesh

# FIG. 27

# FIG. 28

# FIG. 29

EP 4 697 270 A1

FIG. 30

# FIG. 31

```
         ( start )
            │
            ▼                              ⌐S101
┌─────────────────────────────────────────┐
│   Acquire input mesh frame and attributes │
└─────────────────────────────────────────┘
            │
            ▼                              ⌐S102
┌─────────────────────────────────────────┐
│  Decimate vertices included in input mesh │
│  frame to generate base mesh frame        │
└─────────────────────────────────────────┘
            │
            ▼                              ⌐S103
┌─────────────────────────────────────────┐
│  Calculate displacement information       │
│  necessary to reconstruct mesh frame      │
└─────────────────────────────────────────┘
            │
            ▼                              ⌐S104
┌─────────────────────────────────────────┐
│  Encode base mesh frame, displacement     │
│  information, and attributes into bitstream │
└─────────────────────────────────────────┘
            │
            ▼
          ( end )
```

# FIG. 32

**1301**

G{10, 14, 11}

E{7, 12, 9}    F{14, 12, 9}

D{10, 10, 11}

A{6, 8, 9}    C{14, 8, 9}

B{10, 6, 7}

Mesh frame

**1302**

E{7, 12, 8}    F{14, 12, 8}

A{6, 8, 8}    C{14, 8, 8}

Base mesh frame

**1303**

A{0, 0, 1}
B{0, -2, -1}
C{0, 0, 1}
D{0, 0, 3}
E{0, 0, 1}
F{0, 0, 1}
G{-1, 2, 3}

Vertex
displacement
information
(vector format)

**1304**

Encoded data composition (bitstream):

1. Base mesh frame:
 - Vertex coordinates of A, C, E, F
 - Connection information on A, C, E, F

2. Displacement information:
 - Displacement information for displacing vertices based on vertex coordinates acquired from subdividing base mesh frame

3. Video bitstream containing texture data

4. Texture coordinates for applying texture data to mesh frame reconstructed using base mesh frame and displacement information

EP 4 697 270 A1

# FIG. 33

Compressed bitstream → Demultiplexer (2201)

Base mesh bitstream → Base mesh decoder (2202) → Inverse quantizer (2203) → Decoded base mesh → Subdivider (2204)

Subdivided, decoded base mesh

Displacement bitstream → Video decoder (2205) → Image unpacker (2206) → Inverse quantizer (2207) → Inverse wavelet transformer (2208) → Decoded displacement vector → Reconstructor (2209) → Decoded mesh frame

Attribute bitstream → Video decoder (2210) → Decoded attribute map → Color converter (2211) → Decoded attribute map

EP 4 697 270 A1

# FIG. 34

Displacement bitstream — 2221 — Video decoder (2205) → Image unpacker (2206) → 2222 → Inverse quantizer (2207) → Inverse wavelet transformer (2208) → Decoded displacement vector → Reconstructor (2209) → Decoded mesh frame

Arithmetic decoder (2223)

Subdivided, decoded base mesh

# FIG. 35

```
                    ( start )

                                           ⟋S201
    ┌──────────────────────────────────┐
    │  Decode base mesh frame and       │
    │  attributes from bitstream        │
    └──────────────────────────────────┘

                                           ⟋S202
    ┌──────────────────────────────────┐
    │  Perform subdivision process on base mesh │
    │  frame to generate subdivided vertices    │
    └──────────────────────────────────┘

                                           ⟋S203
    ┌──────────────────────────────────┐
    │  Decode displacement information  │
    │  from bitstream                   │
    └──────────────────────────────────┘

                                           ⟋S204
    ┌──────────────────────────────────┐
    │  Move vertices of base mesh and vertices  │
    │  generated through subdivision process to │
    │  new positions using displacement information │
    │  to reconstruct mesh frame, and apply     │
    │  attribute information            │
    └──────────────────────────────────┘

                    ( end )
```

# FIG. 36

**2301**

E{7, 12, 8}   F{14, 12, 8}

A{6, 8, 8}   C{14, 8, 8}

Decoded base
mash frame

**2302**

G{11, 12, 8}
E{7, 12, 8}   F{14, 12, 8}
D{10, 10, 8}
A{6, 8, 8}   C{14, 8, 8}
B{10,8,8}

Mesh frame including
subdivided vertices

**2303**

A{0, 0, 1}
B{0, -2, -1}
C{0, 0, 1}
D{0, 0, 3}
E{0, 0, 1}
F{0, 0, 1}
G{-1, 2, 3}

Vertex
displacement
information
(vector format)

**2304**

G{10, 14, 11}
E{7 ,12, 9}   F{14, 12, 9}
D{10, 10, 11}
A{6, 8, 9}   C{14, 8, 9}
B{10, 6, 7}

Reconstructed
mesh frame

# FIG. 37

(a)

A

B          C

Base mesh

First
subdivision

→

(b)

A

D          E

B     F     C

Mesh after first
subdivision
(LoD 1)

Second
subdivision

→

(c)

A

G          H
O
D          E
I     J     K     L
B   M   F   N   C

Mesh after second
subdivision
(LoD 2)

# FIG. 38

(a)

A

C          B

Z

Base mesh

First
subdivision

→

(b)

A

X          Y
U
C          B
S          T

Z

Mesh after first
subdivision
(first LoD)

Second
subdivision

(c)

A

D   F   E
X          Y
U
C   H   G   B
S          T

Z

Mesh after second
subdivision
(second LoD)

Displace

→

(d)

A

D          E
F
X          Y
H     G
C          B
U
S     T

Z

Mesh after
displacement
(output)

# FIG. 39

Original mesh
(for reference)

# FIG. 40

Original mesh

# FIG. 41

Second submesh

A2

A1

B1    B2

C1

C2

First submesh

# FIG. 42

Y Plane

U Plane

V Plane

Displacement data

Padded data

# FIG. 43

Y Plane
U Plane
V Plane

CTU
Boundary

LoD0 related data
LoD1 related data
LoD2 related data
LoD3 related data
Padded data (Optional)

# FIG. 44

Y Plane
U Plane
V Plane

CTU
Boundary

LoD0 related data
LoD1 related data
LoD2 related data
LoD3 related data
Padded data (Optional)

# FIG. 45

```
                    ( start )
                        │
                        ▼                          ╭─S301
  ┌──────────────────────────────────────────────┐
  │  Encode first vertices and first             │
  │  displacement vectors into bitstream         │
  └──────────────────────────────────────────────┘
                        │
                        ▼                          ╭─S302
  ┌──────────────────────────────────────────────┐
  │  Reconstruct second vertices by decoding first│
  │  vertices and first displacement vectors and  │
  │  displacing first vertices using first        │
  │  displacement vectors                         │
  └──────────────────────────────────────────────┘
                        │
                        ▼                          ╭─S303
  ┌──────────────────────────────────────────────┐
  │  Calculate third vertices through interpolation│
  │  process based on positions of vertices including│
  │  at least second vertices                     │
  └──────────────────────────────────────────────┘
                        │
                        ▼                          ╭─S304
  ┌──────────────────────────────────────────────┐
  │  Calculate second displacement vectors from   │
  │  third vertices to fourth vertices            │
  └──────────────────────────────────────────────┘
                        │
                        ▼                          ╭─S305
  ┌──────────────────────────────────────────────┐
  │  Encode second displacement                   │
  │  vector into bitstream                        │
  └──────────────────────────────────────────────┘
                        │
                        ▼
                    ( end )
```

# FIG. 46

start

S401

Decode first vertices and first
displacement vectors from bitstream

S402

Reconstruct second vertices by displacing first
vertices using first displacement vectors

S403

Derive third vertices through interpolation
process based on positions of vertices
including at least second vertices

S404

Decode second displacement
vector from bitstream

S405

Reconstruct fourth vertices by displacing third
vertices using second displacement vectors

S406

Reconstruct mesh using at least
second vertices and fourth vertices

end

## FIG. 47

6002

6001

{x1, y1, z1}

A

A1

{x3, y3, z3}

C1

B1

C

B

{x2, y2, z2}

D1

D

{x4, y4, z4}

## FIG. 48

A1

X

Y

C1

Z

B1

S

T

D1

# FIG. 49

Parameter

| | Data |

# FIG. 50

Parameter

| | Data |

Header

# FIG. 51

# FIG. 52

R

{x3, y3, z3}

X

Q

{x2, y2, z2}

P

{x1, y1, z1}

A

B

# FIG. 53

R

{rx, ry, rz}

X

Q

{x4, y4, z4}

{px, py, pz}

{x2, y2, z2}

P

{x1, y1, z1}

A

Y

B

FIG. 54

6101

A1

X

Z

Y

C1

B1

S

T

D1

{x5, y5, z5}

{x6, y6, z6}

{x7, y7, z7}

{x8, y8, z8}

{x9, y9, z9}

6102

A1

X1

Z1

Y1

C1

B1

S1

T1

D1

FIG. 55

A1

X1

Y1

Z1

Texture

C1

B1

S1

T1

D1

# FIG. 56

# FIG. 57

## INTERNATIONAL SEARCH REPORT

| International application No. |
|---|
| **PCT/JP2024/014562** |

| A. | CLASSIFICATION OF SUBJECT MATTER |
|---|---|

*G06T 9/00*(2006.01)i
FI: G06T9/00 100

According to International Patent Classification (IPC) or to both national classification and IPC

| B. | FIELDS SEARCHED |
|---|---|

Minimum documentation searched (classification system followed by classification symbols)

G06T9/00 - 9/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2010/089380 A1 (THOMSON LICENSING) 12 August 2010 (2010-08-12)<br>entire text, all drawings | 1-12 |
| A | MAMMOU, Khaled et al. Video and Subdivision based Mesh Coding. 2022 10th European Workshop on Visual Information Processing(EUVIP). 11 September 2022, pp. 1-6<br>entire text, all drawings | 1-12 |
| A | KRONROD, Boris and GOTSMAN, Craig. Optimized Compression of Triangle Mesh Geometry Using Prediction Trees. Proceedings of the First International Symposium on 3D Data Processing Visualization and Transmission (3DPVT'02). 2002, pp. 1-7<br>entire text, all drawings | 1-12 |
| A | CHOI, Yi-Hyun et al. Overview of the Video-based Dynamic Mesh Coding(V-DMC) Standard Work. 2022 13th International and Communication Technology Convergence (ICTC). IEEE. 25 November 2022, pp. 578-581<br>entire text, all drawings | 1-12 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 June 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/014562**

| Patent document cited in search report | Publication date (day/month/year) | Patent family member(s) | Publication date (day/month/year) |
|---|---|---|---|
| WO 2010/089380 A1 | 12 August 2010 | JP 2012-517059 A<br>US 2011/0285708 A1<br>EP 2216750 A1<br>CN 102308318 A<br>KR 10-2011-0126110 A | |

Form PCT/ISA/210 (patent family annex) (July 2022)

**EP 4 697 270 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006187015 A